# EUROPEAN PATENT APPLICATION

(11) **EP 1 265 302 A2**
(43) Date of publication of application: **11.12.2002**
(21) Application number: 02001156.5
(22) Date of filing: 25.01.2002
(51) Int. Cl.: H01M 4/62

(54) **Lithium secondary battery positive electrode plate and lithium secondary battery**

(30) Priority: 04.06.2001 JP 2001167559
(71) Applicant: Hitachi, Ltd., Chiyoda-ku, Tokyo 101-8010 (JP); SHIN-KOBE ELECTRIC MACHINERY CO. LTD, Tokyo 103-0023 (JP)
(72) Inventor: Kumashiro, Yoshiaki, Hitachi-shi, Ibaraki 316-0006 (JP); Kasai, Masahiro, Mito-shi, Ibaraki 310-0912 (JP); Takeuchi, Seiji, Hitachiota-shi, Ibaraki 313-0042 (JP)
(74) Representative: Beetz & Partner Patentanwälte

(57) **Abstract**

A nonaqueous lithium secondary battery comprises a positive electrode (31) which inserts/detaches lithium ions, and includes a collector on which a positive electrode active material for inserting/detaching lithium ions, a conduction assistant for increasing electric conduction of the positive electrode active material, and a binding agent for binding the positive electrode active material and the conduction assistant are applied, a negative electrode (32) for inserting/detaching lithium ions, and a separator (33) for separating the positive electrode and the negative electrode where a ratio (B/A) of an average particle diameter of the conduction assistant (A) to an average particle diameter of the positive electrode active material (B) is from 0.1 to 100, and the conduction assistant includes at least clustered amorphous carbon.

## Description

### BACKGROUND OF THE INVENTION

### 1.Field of the Invention

The present invention relates to a lithium secondary battery, a conduction assistant used for it, and a battery system using it.

### 2.Description of the Prior Art

An electric vehicle which travels with only motors (Pure EV), and a hybrid electric vehicle (HEV) have attracted attention recently with a background of the environmental problem. Especially, the HEV simultaneously uses an engine and a motor for traveling, uses regenerative energy during braking to charge batteries, and charges during traveling. Thus, it has an advantage of charging batteries in addition to increasing mileage and reducing exhaust gas. It is estimated that the HEV will be more widely used. Batteries for the HEV are frequently charged/discharged for 5 to 20 sec while accelerating, starting and regenerating. For example, the batteries are discharged with a current exceeding 50 A for approximately 10 sec during merging on expressway. Namely, the battery for the HEV requires a high output characteristic for supplying a high energy momentarily. It is required to reduce an internal resistance of the battery, and to reduce a voltage drop as small as possible when a large current flows to realize the high output characteristic. Especially, since this type of secondary battery uses a positive electrode material which has a low electron conduction, a electrode plate resistance of the positive electrode largely affects the internal resistance of the battery. It is general to add graphite or carbon black as a conduction assistant to reduce the electrode resistance of the positive electrode, and it is tried to increase contact between the positive electrode material and the conduction assistant, thereby reducing the conduction of the positive electrode, resulting in increasing the internal resistance of the battery. For example, Japanese application patent laid-open publication No. Hei 10-188955 discloses an electrode for a battery for having porosity of a positive electrode mix to 18% to 25% in a positive electrode constituted such that a number of active materials comprising metal oxide particles whose surface is coated with a layer of a porous conductive agent are assembled. Japanese application patent laid-open publication No. Hei 11-329415 discloses a lithium battery provided with a porous positive electrode whose porosity is 10% to 65% where the surface of a positive electrode active material is coated with conductive polymer molecules. They both try to increase the electron conduction while preventing the porosity of the electrode (positive electrode) from decreasing.

However, since both of them coat the surface of the active material, diffusion of lithium ions is inhibited, there is a problem of increasing impedance caused by insertion/detachment of lithium ions.

The sum of
(1) A resistance component dominated by the electron conduction derived from the contact between the active material and the conduction assistant in the electrode mix,
(2) A resistance component dominated by the diffusion in particles derived from the insertion/detachment of lithium ions, and
(3) A resistance component dominated by mass transfer derived from ion concentration gradient generated when lithium ions are supplied from an offshore (area far from the positive electrode active material) to a neighborhood of the active material particles in the electrolytic solution.
determines the voltage drop caused by the electrode resistance of the positive electrode.

### SUMMARY OF THE INVENTION

A purpose of the present invention is to realize an electrode whose electron conduction is high, and whose electrolytic solution holding ratio is large without inhibiting the diffusion of the lithium ions, thereby realizing a low resistance positive electrode whose mass transfer components of the internal resistance is small, resulting in providing a lithium secondary battery excellent in input/output characteristic at a large current.

An alternative purpose of the present invention is to reduce the mass transfer component of the electrode plate resistance of the positive electrode.

The characteristic of the present invention to attain the purposes described above is to use clustered amorphous carbon where d₀₀₂ of a surface spacing of (002) surface obtained by X-ray analysis is from 0.350nm to 0.390nm, and a ratio (B/A) of an average particle diameter of the conduction assistant (A) to an average particle diameter of the positive electrode active material (B) is from 0.1 to 100 as the conduction assistant for the positive electrode.

The following section describes effects of a positive electrode obtained in the present invention, namely the effects of using clustered amorphous carbon as a conduction assistant.

Using clustered amorphous carbon as a conduction assistant has an effect of maintaining air gaps in an electrode press process, thereby having an effect of increasing electrolytic solution holding ratio.

A positive electrode with high electrolytic solution holding ratio provides an effect of reducing a voltage drop while discharging, thereby providing an effect of reducing the electrode resistance.

A battery using the positive electrode plate has a low internal resistance since it uses the positive electrode plate with a small electrode plate resistance, thereby having an effect of providing a battery with high power density.

Obtaining the battery with high power density provides an electric vehicle with a long cruising distance, and a hybrid electric vehicle with an excellent fuel economy characteristic.

Using a mixture of the clustered amorphous carbon and the graphite conduction material as a positive electrode conduction material has an effect of holding air gaps in an electrode press process, thereby providing an effect of increasing electrolytic solution holding ratio.

Graphite has an effect of making the collecting characteristic excellent.

A positive electrode with high electrolytic solution holding ratio has an effect of reducing a voltage drop during discharge, thereby providing an effect of reducing the electrode plate resistance.

Adding graphite conduction material to the clustered amorphous carbon increases electron conduction, and reduces the electrode plate resistance.

A battery using the positive electrode plate has a low internal resistance since it uses the positive electrode plate with a small electrode plate resistance, thereby having an effect of providing a battery with high power density.

Obtaining the battery with high power density provides an electric vehicle with a long cruising distance, and a hybrid electric vehicle with an excellent fuel economy characteristic.

Using a mixture of the clustered amorphous carbon and carbon black as a positive electrode conduction material has an effect of holding air gaps in an electrode press process, thereby providing an effect of increasing electrolytic solution holding ratio.

Using carbon black further has an effect of increasing electrolytic solution holding ratio in addition to the effect of maintaining the air gaps since the carbon black itself has high electrolytic solution holding ratio.

A positive electrode with high electrolytic solution holding ratio provides an effect of reducing a voltage drop while discharging, thereby providing an effect of reducing the electrode resistance.

A battery using the positive electrode plate has a low internal resistance since it uses the positive electrode plate with a small electrode plate resistance, thereby having an effect of providing a battery with high power density.

Obtaining the battery with high power density provides an electric vehicle with a long cruising distance, and a hybrid electric vehicle with an excellent fuel economy characteristic.

Using a mixture of clustered amorphous carbon, the graphite conduction material and carbon black as a positive electrode conduction material has an effect of holding air gaps in an electrode press process, thereby providing an effect of increasing electrolytic solution holding ratio.

Graphite has an effect of making the collecting characteristic excellent, and carbon black has an effect of increasing electrolytic solution holding ratio in addition to the effect of maintaining the air gaps since the carbon black itself has high electrolytic solution holding ratio.

A positive electrode with high electrolytic solution holding ratio provides an effect of reducing a voltage drop while discharging, and the graphite conduction material increases electron conduction of the positive electrode, thereby providing an effect of reducing the electrode resistance.

A battery using the positive electrode plate has a low internal resistance since it uses the positive electrode plate with a small electrode plate resistance, thereby having an effect of providing a battery with high power density.

Obtaining the battery with high power density provides an electric vehicle with a long cruising distance, and a hybrid electric vehicle with an excellent fuel economy characteristic.

Producing a positive electrode plate with electrolytic solution holding ratio from 10wt% to 25wt% has an effect of reducing a voltage drop of a positive electrode without reducing collecting characteristic of the positive electrode plate.

The positive electrode plate with a low voltage drop has an effect of reducing the electrode resistance. A battery using the positive electrode plate has a low internal resistance since it uses the positive electrode plate with a small electrode plate resistance, thereby having an effect of providing a battery with high power density.

Obtaining the battery with high power density provides an electric vehicle with a long cruising distance, and a hybrid electric vehicle with an excellent fuel economy characteristic.

### BRIEF DESCRIPTION OF THE DRAWINGS

FIG. 1 is shows a relationship between discharge time and battery voltage of a lithium secondary battery.
FIG. 2 is shows a relationship between discharge time and battery voltage of a lithium secondary battery.
FIG. 3 is a section view showing the constitution of a cylindrical lithium secondary battery of the present invention.
FIG. 4 is a schematic of an electrical/chemical cell for examining discharge characteristic and electrode plate resistance of a positive electrode.
FIG. 5 is shows a relationship between discharge time and battery voltage of a positive electrode measured using the electrical/chemical cell of FIG. 4.
FIG. 6 is scanning electron microscope image of the positive electrode of the comparison example 1.
FIG. 7 is X-ray diffraction pattern of the positive electrode of the comparison example 1.
FIG. 8 is shows a relationship between discharge time and battery voltage of the positive electrode measured using the electrical/chemical cell of FIG. 4.
FIG. 9 is shows I-ΔV characteristic of the positive electrode measured using the electrical/chemical cell of FIG. 4.
FIG. 10 is a drawing for showing a relationship between discharge current and battery voltage at five seconds after the start of discharge of the lithium secondary battery using the lithium secondary battery in FIG. 3.
FIG. 11 is a drawing for showing how to obtain the output of a lithium secondary battery using FIG. 10.
FIG. 12 is scanning electron microscope image of the positive electrode of embodiment 1.
FIG. 13 is X-ray diffraction pattern of the positive electrode of embodiment 1.
FIG. 14 is shows a relationship between a ratio (B/A) of the average particle diameter of a positive electrode material (B) to the average particle diameter of clustered amorphous carbon (A), and an electrode plate resistance of a positive electrode measured at the positive electrode of embodiment 1 using the electrical/chemical cell of FIG. 4.
FIG. 15 is scanning electron microscope image of the positive electrode of embodiment 2.
FIG. 16 is X-ray diffraction pattern of the positive electrode of embodiment 2.
FIG. 17 is shows a relationship between a ratio (B/A) of the average particle diameter of a positive electrode material (B) to the average particle diameter of clustered amorphous carbon (A), and an electrode plate resistance of a positive electrode measured at the positive electrode of embodiment 2 using the electrical/chemical cell of FIG. 4.
FIG. 18 is scanning electron microscope image of the positive electrode of embodiment 3.
FIG. 19 is X-ray diffraction pattern of the positive electrode of embodiment 3.
FIG. 20 is shows a relationship between a ratio (B/A) of the average particle diameter of a positive electrode material (B) to the average particle diameter of clustered amorphous carbon (A), and an electrode plate resistance of a positive electrode measured at the positive electrode of embodiment 3 using the electrical/chemical cell of FIG. 4.
FIG. 21 is scanning electron microscope image of the positive electrode of embodiment 4.
FIG. 22 is X-ray diffraction pattern of the positive electrode of embodiment 4.
FIG. 23 is shows a relationship between a ratio (B/A) of the average particle diameter of a positive electrode material (B) to the average particle diameter of clustered amorphous carbon (A), and an electrode plate resistance of a positive electrode measured at the positive electrode of embodiment 4 using the electrical/chemical cell of FIG. 4.
FIG. 24 is shows a relationship between electrolytic solution holding ratio and electrode plate resistance of the positive electrode measured using the electrical/chemical cell of FIG. 4.

### DESCRIPTION OF THE PREFERRED EMBODIMENTS

It is required for secondary batteries used for an electric vehicle particularly for a hybrid electric vehicle (HEV) to have high output characteristic with a large discharge current.

It is desirable to use a battery with a rated capacity from 2 to 20Ah for the HEV, and the battery is used while being repeatedly charged/discharged frequently at an interval of 5 to 20 seconds.

In this situation, a charge/discharge current becomes about 10 to 20C against the battery capacity. A current value of 1C discharges the rated capacity of a battery 100% in one hour.

It is desirable to charge/discharge batteries for the HEV with around 40 to 60% of depth of discharge as the center. The depth of discharge for a battery is represented as a value while a rated capacity is designated as 100%. The depth of discharge may be noted as DOD (Depth of Discharge). For example, when a battery has a rated capacity of 5Ah, a state of 50% of depth of discharge indicates a state where an electric quantity of 2.5Ah is discharged from a fully charged state.

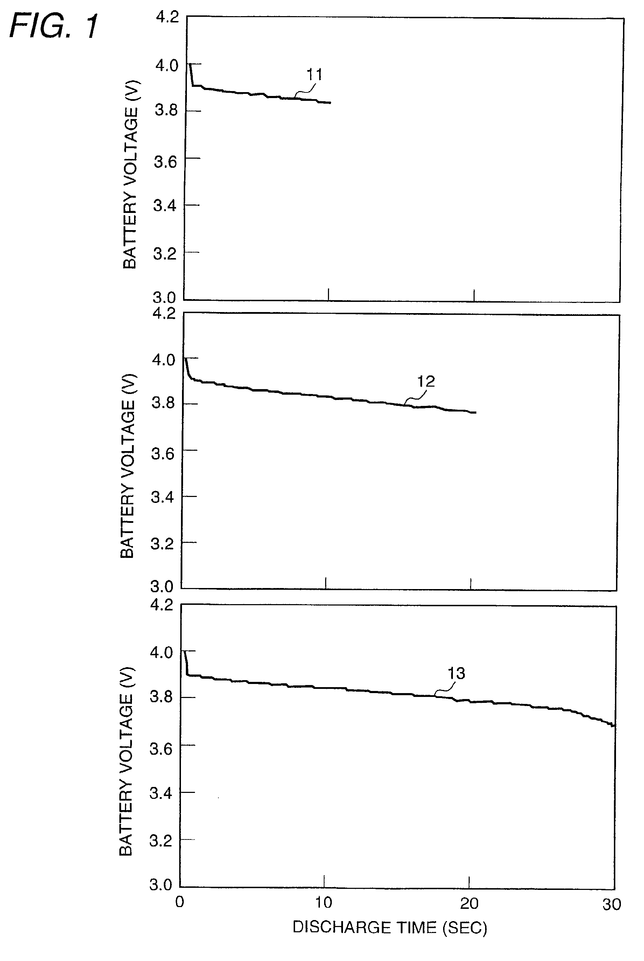

The following section describes characteristics of the battery for the HEV which are a technology relating to the present invention while referring to FIG. 1.

FIG. 1 (a), (b), and (c) show discharge curves when a battery with a rated capacity of 10Ah is discharged for 10, 20, and 30 seconds respectively at constant power of 150 W when the DOD is 50%. When a rapid voltage drop appears immediately after the start of the discharge, the voltage changes slowly. As the discharge time passes, the drop of the voltage increases gradually in the last part of the discharge.

The smaller voltage drop is a high output characteristic desirable as a battery for the HEV.

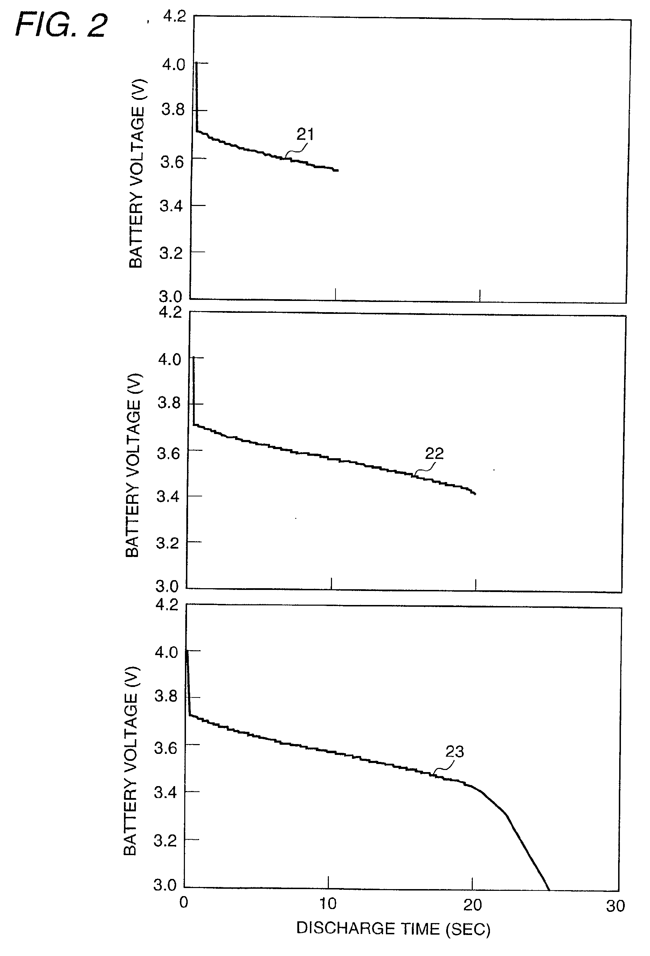

On the other hand, FIG. 2 shows discharge curves for a battery with a rated capacity of 5Ah when discharges same as those in FIG. 1 (Discharged for 10, 20, and 30 seconds respectively at constant power of 150 W when the DOD is 50%) are conducted. A problem that the output is not supplied because of a large voltage drop after 20 seconds for the discharge for 30 seconds occurs. A battery with a smaller rated capacity has a shorter time for supplying a predetermined output.

It is especially required to reduce the weight of the batteries for the HEV for increasing mileage of the HEV. As a mean for reducing the weight of the battery, an active material of the battery is reduced to reduce the weight of the battery. It simply means to reduce the capacity of the battery. Thus, it is required to provide a battery which presents a small voltage drop during a large current discharge, and maintains a slow voltage change for a long time even when the capacity of the battery is reduced.

However, a battery with a small capacity presents a large voltage drop when the same discharge is conducted as described before.

It is required for a battery for the HEV to maintain a discharge for at least 20 seconds, and especially the goal is to restrain the voltage drop at the last part of the discharge. The present invention relates to a low resistance positive electrode which provides a mean for attaining the goal described before.

The following section describes a relationship among the output of a battery, an internal resistance, and an electrode plate resistance of a positive electrode.

The output of a battery means energy per unit time (W: watt) with which the battery can be charged/discharged. Unless this output has power enough for driving a motor for driving wheels of an electric vehicle, the electric vehicle does not travel.

The output described before is compared as output per weight and output per volume for comparing the capability of a single battery or a battery module. Since it is important for a secondary battery or a secondary battery module applied to the electric vehicle (whether it is a Pure EV or an HEV) to be light, high weight power density (W/kg) is required.

When a load is connected with a battery to flow a current, the output voltage of the battery decreases compared with the battery before the current flows. An internal resistance of the battery causes this. The output is a physical quantity represented as (voltage) × (current), and a drop of the output voltage of the battery caused by the internal resistance leads to a drop in the output of the battery.

The inventors of the present invention found that an electrode plate resistance of a positive electrode determines the internal resistance of a battery. The inventors of the present invention also found that the electrode plate resistance of the positive electrode comprises a resistance component which is dominated by diffusion in active material particles, and is determined by insertion/detachment of lithium ions, and a resistance component which is dominated by mass transfer, and is determined by ion concentration gradient generated when lithium ions are supplied from an offshore to a neighborhood of the active material particles in the electrolytic solution in addition to a resistance component which is dominated by electron conduction, and is determined by a contact between the active material of an electrode mix and a conduction assistant.

A study by the present inventors revealed that the third resistance component dominated by the mass transfer of the three types resistance components especially relates to the voltage of the later part of the discharge, and is derived from holding quantity of electrolytic solution contained in the positive electrode mix constituting the battery.

Clustered amorphous carbon is used as the conduction assistant to realize an electrode with high electrolytic solution holding ratio, and a low resistance positive electrode realized by this is used to realize a high output battery in the present invention.

The following section describes a manufacture for a positive electrode of a nonaqueous lithium secondary battery of the present invention, and clustered amorphous carbon used as a conduction assistant.

The positive electrode of the lithium secondary battery comprises a positive electrode active material, a conduction assistant, a binding agent, and a collector. Since the positive electrode active material generally has a high resistance, mixing carbon powders as the conduction assistant compensates the electric conduction of the positive electrode active material.

A graphite conduction assistant is generally used as a main conduction assistant. The positive electrode is generally manufactured as follows.

First, positive electrode slurry is produced by mixing the positive electrode active material, the conduction assistant, the binding agent, and organic solvent. An application machine such as a roll transfer or a doctor blade pastes the slurry on a collector made with an aluminum foil. It is desirable to set the thickness of the aluminum foil to 10 to 30µ. The positive electrode after the pasting is dried at 80 to 120°C, and is press formed with a roll press.

Then, it is vacuum dried at 100 to 150°C to produce the positive electrode

It is desirable to apply a line pressure of 100 to 300kg/cm during the roll press, and it is desirable to set the electrode density of the finally formed positive electrode to 2.4g/cm³ to 3.0g/cm³. It is more preferable to set it to 2.5g/cm³ to 2.8g/cm³.

The present invention relates to a conduction assistant for a positive electrode of a lithium secondary battery, a positive electrode produced with the conduction assistant, and a lithium secondary battery using the positive electrode. The present invention has a characteristic that clustered amorphous carbon is used as the conduction assistant for the positive electrode.

The clustered amorphous carbon is what described in detail below.

A carbon material such as graphite and carbon black with a minute particle diameter of approximately 10nm is used as the conduction assistant for the positive electrode in general.

The carbon material is roughly divided into a graphite carbon material and an amorphous carbon material. The carbon material has a base structure of laminated hexagon mesh surfaces, and the hexagon mesh surfaces are laminated with 3D regularity to form graphite. Carbon is classified into easily graphitized carbon whose carbon is easily graphitized and hardly graphitized carbon whose carbon is hardly graphitized according to the regularity of the hexagon mesh surface lamination.

The easily graphitized carbon includes coke, and the hardly graphitized carbon includes carbon black such as acetylene black. The graphite is obtained by applying a heat process of high temperature of 2500°C or more to an easily graphitized carbon material obtained from petroleum coke or coal pitch coke.

Coke is obtained by applying a heat process to coal residue, petroleum residue, and coal tar pitch. Carbon black is obtained by thermally decomposing natural gas or acetylene gas. Hardly graphitized carbon has a characteristic that it has fine holes and gaps inside carbon particles.

Conventional hardly graphitized carbon such as acetylene black described before is very fine particles with an average diameter of about 10 to 50nm in general, and has a large specific surface area of 5 to 50m²/g of BET specific surface area.

The present invention uses clustered amorphous carbon, and has a characteristic that it includes particles with the particle diameter of 5µm or more, and uses particles with the average particle diameter of 0.1 to 30µm as its specification. In this case, the specific surface area is different from that of the conventional hardly graphitized amorphous carbon material, and is a relatively small value from 0.5 to 5.0m²/g.

The clustered amorphous carbon of the present invention has the particle diameter same as that of the conventional graphite conduction assistant, simultaneously has characteristics of hardly graphitized carbon, and has space gaps and minute holes inside the particles. The amorphous conduction assistant used for the present invention is referred to clustered amorphous carbon, since it has a relatively large particle shape similar to that of graphite compared with the conventional hardly graphitized carbon which has a minute particle shape.

When the clustered amorphous carbon is used as the conduction assistant for the positive electrode, it is possible to increase electrolytic solution holding ratio because of an effect of having gaps and minute holes inside particles, and an effect of a mechanical characteristic that it hardly reduces air gap ratio of the electrode while the graphite conduction assistant rapidly increases its density during the electrode press as described before. It provides a low resistance positive electrode which restrains the voltage drop during the last part of the discharge.

When the conventional graphite conduction assistant is used, since graphite is a material with small number of air gaps as well as the hexagon mesh surfaces are laminated regularly, the air gap is closed when a pressure is applied in the press process of the electrode manufacturing process, and the density increases by 1.2 to 2.5 times, a positive electrode with high electrolytic solution holding ratio is not obtained.

Since the conventional hardly graphitized amorphous carbon has a minute particle diameter, and has a small volume density, there is a problem that it is hard to increase the electrode density to 2.4g/cm³ or more, it is impossible to maintain the mechanical strength of the electrode because of a low adhesion, and the cycle life of the battery reduces. The present invention uses the clustered amorphous carbon to realize a positive electrode with high electrolytic solution holding ratio without decreasing the electrode strength.

There are the following differences between the clustered amorphous carbon and the graphite conduction assistant. When the crystal structure of the conduction assistant powders are measured with X-ray diffraction, a sharp and strong diffraction peak with a half-value width of 0.1° or less is observed around 2θ = 28° for graphite conduction assistant, while only a broad and weak peak is observed where 2θ is from 20° to 30°. Surface spacing of (002) surface obtained by X-ray diffraction is d₀₀₂ = 0.335 to 0.337nm for the graphite conduction assistant, d₀₀₂ = 0.34 to 0.36nm for the easily graphitized carbon, and d₀₀₂ = 0.35 to 0.39nm for the hardly graphitized carbon. The clustered amorphous carbon has the similar characteristic as the hardly graphitized carbon with respect to crystal structure.

The following characteristics are obtained when the lattice images of these carbon materials with a transmission electron microscope.

A stripe pattern showing the layer structure is arranged orderly in parallel for graphite. The stripe is almost linear, and the individual stripes represent the individual layers of the hexagon mesh surface of the graphite structure.

Overlapped stripe patterns are observed more or less for easily graphitized carbon though the stripe patterns are not as orderly as the graphite. The individual stripes are shorter than those of graphite, more or less distortion is observed, and the spacing of the stripes is wider than that of graphite.

Smaller overlapped stripe patterns than those of the easily graphitized carbon are observed for hardly graphitized carbon, and their directions are random. The clustered amorphous carbon of the present invention has a structure of an irregular hexagon mesh surface as hardly graphitized carbon.

The following section describes differences when observed with a scanning electron microscope (SEM).

Main particles of the graphite conduction assistant is 5 to 10µm, their aspect ratio is relatively large, and has a relatively flat structure. This reflects that the hexagon mesh surface forms a crystal arranged regularly.

On the other hand, clustered amorphous carbon has a particle diameter similar to that of the graphite conduction assistant, does not has an anisotropic shape, and the aspect ratio is close to 1. It reflects that the forming of the hexagon mesh surface is isotropic. This characteristic becomes more clear when the positive electrode shape is observed after the press process.

The positive electrode using the graphite conduction assistant has a shape where graphite enters between particles of the positive electrode active material since graphite layers shift to one another and the shape crushes. On the other hand, the positive electrode using the clustered amorphous carbon maintains the shape of the conduction assistant, and air gaps secured by this absorb electrolytic solution, and provides a low resistance positive electrode with high electrolytic solution holding ratio.

The clustered amorphous carbon used in the present invention has the following characteristics. The clustered amorphous carbon is produced by reinforcing bridges between layers of easily graphitized carbon to make it pseudo-hardly graphitized. The clustered amorphous carbon whose surface spacing of (002) surfaces, d₀₀₂, is 0.350 to 0.390, and whose average particle diameter is 0.1 to 50µm is desirable.

A high output lithium secondary battery of the present invention is produced as follows.

The lithium secondary battery of the present invention includes a positive electrode as a first electrode, and a negative electrode as a second electrode, and is charged/discharged when lithium ions communicate between the both electrodes. A material which contains or absorbs lithium is referred to an active material in the both electrodes. The active material of the positive electrode comprises oxide containing lithium. For example, it is oxide such as LiCoO₂ or LiNiO₂ which has a layer structure, or oxide such as LiMn₂O₄ which has a spinel type crystal structure. It is more desirable to use oxide of Mn such as LiMn₂O₄ or Li_{1+X}Mn_{2-X}O₄ to obtain a high output. The present invention uses a positive electrode active material of Li_{1+X}Mn_{2-X}O₄ where X = 0.01 to 0.33, or a positive electrode active material of Li_{1+X}Mn_{2-X-y}M_{y}O₄ (y is from 0.02 to 0.10) where a part of Mn is replaced with other elements such as Co or Cr.

The present invention is valid for a case where a positive electrode active material whose replacing quantity y is further increased to 0.1 ≤ y ≤ 1.0 is used, and the operation is conducted over 4V. If this is the case, it is desirable to set the range of x to 0 ≤ x ≤ 1.3.

The positive electrode using the positive electrode active material and the clustered amorphous carbon of the present invention is produced as follows. The positive electrode active material in powder, a clustered amorphous carbon conductive material, and a binding agent such as poly vinylidene fluoride (PVDF) are mixed to produce slurry.

It is desirable that the ratio B/A between the average particle diameter of the clustered amorphous carbon (A) and the average particle diameter of the positive electrode active material is 100 or less. The clustered amorphous carbon where surface spacing d₀₀₂ of the (002) surface obtained by X-ray diffraction is 0.350 to 0.390nm is used. The mix is pasted on a collector made of an aluminum foil with a thickness of 15 to 20µm, for example, and is dry pressed into the positive electrode. It is desirable that the electrode paste thickness after the press is 10 to 150µm.

The mixture ratio of the positive electrode active material is 50 to 95 (wt%) in the mix.

The electrode strength may be adjusted such that carbon black with weight ratio of 1 to 50% is mixed with the clustered amorphous carbon as a conduction agent for application. It is also possible to use both of the graphite conduction agent and the amorphous conduction agent of the present invention for adjusting the electrode density and the electrolytic solution holding ratio. When the clustered amorphous carbon of the present invention is mixed with other conduction assistants for application as described before, it is necessary to mix the clustered amorphous carbon conduction assistant of the present invention with a ratio of 50wt% or less to other conduction assistants.

A carbon material which absorbs lithium such as graphite or coke is used for the negative electrode material. An oxide negative electrode such as SnO₂ and an alloy material including Li, Si, or Sn can be used as well. A material including nitrogen can also be used.

They are applied on a collector made of Cu with a binding agent as for the positive electrode as described before, and are press dried to create a negative electrode.

An electrode group is formed such that a porous separator with a thickness of 15 to 60µm is held between the negative electrode and the positive electrode, and they are rolled into a cylinder or a flat ellipsis, or the negative electrode and the positive electrode are alternately inserted into a bag shape separator, and are piled.

The electrode group is contained in a cylindrical or square can made of stainless, aluminum, or metal plated with nickel, and sealed.

Electrolytic solution of organic solvent such as ethylene carbonate, propylene carbonate, dimethyl carbonate, or diethyl carbonate including lithium salt electrolyte such as lithium phosphate hexafluoride (LiPF₆) or lithium borate tetrafluoride (LiBF₄) of about 0.5 to 2 M in volume density is sealed in the can as a battery.

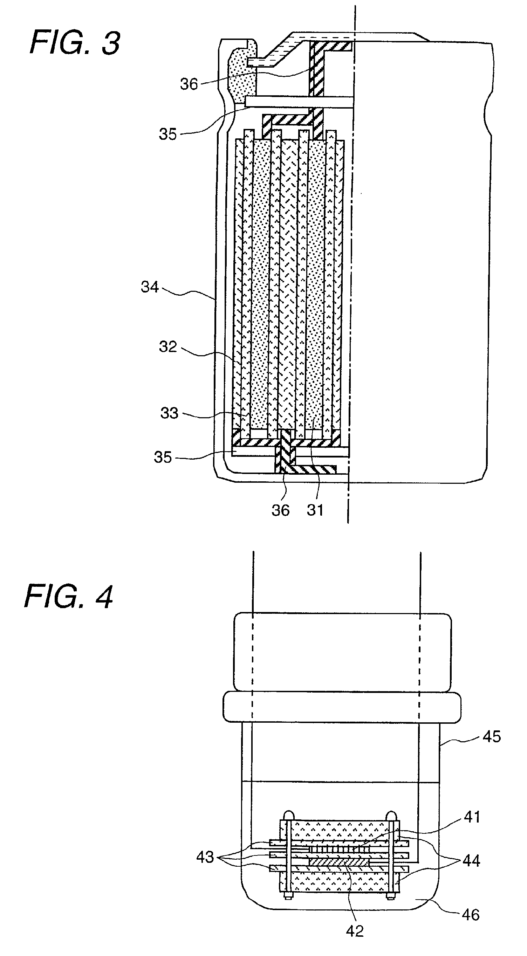

The following section describes a structure of a lithium secondary battery using a positive electrode of the present invention while referring to FIG. 3.

A lithium secondary battery in FIG. 3 has a constitution where a belt-shape positive electrode 31 and a belt-shape negative electrode 32 are laminated with a separator 33 between them, are rolled into scrolled electrodes, and are contained in a battery can 34.

Electrolytic solution is infused into the battery can 34. Insulating plates 35 are placed between the battery can 34 and the top and bottom of the scrolled electrodes.

The following section describes a manufacturing procedure of the lithium secondary battery in FIG. 3, and the manufacturing procedure is not limited in this procedure.
(1) First, the pasted electrodes comprising the belt-shape positive electrode 31 and the belt-shape negative electrode 32 are cut into a predetermined length.
(2) Tabs 36 for extracting current are formed by spot welding or ultrasonic welding. The tabs 36 are square metal foil made of the same material as the collector, and is provided for extracting a current from the electrodes. It is desirable to attach multiple tabs for a battery for which a high output characteristic with a large current discharge for the HEV or the like is required.
(3) The tabbed electrodes are laminated while holding separators made of polythene or polypropylene between them, are rolled into a cylindrical shape as the electrode group, and are contained in a cylindrical container. Alternately, bag like separators are used for containing the electrodes, are piled sequentially, and are contained a square container.
   It is desirable to use stainless or aluminum for the material of the container.
(4) After the electrode group is contained in the battery container, the electrolytic solution is infused, and the container is sealed. It is desirable to dissolve LiPF₆, LiBF₄, and LiClO₄ as electrolyte into solvent such as dimethyl carbonate, ethylene carbonate, propylene carbonate for producing the electrolytic solution. It is desirable to set the density of the electrolyte from 0.7 M to 1.5 M. The electrolytic solution is infused, the battery container is sealed, and the lithium secondary battery shown in FIG. 3 is completed.

The following section describes a measuring method for the discharge characteristic and the electrolytic solution holding ratio of the positive electrode. A disc of 15mm in diameter is punched out with a punch tool from a positive electrode plate where the mix is pasted on one side, and a test positive electrode is produced. When a positive electrode plate of a lithium secondary battery completed as a product is examined, the lithium secondary battery is disassembled in an inert atmosphere such as argon, and the positive electrode is removed for evaluating the characteristics of the positive electrode plate.

The positive electrode plate of the disassembled battery is separated, is washed enough with organic solvent such as dimethyl carbonate, and the solvent is dried sufficiently.

When the mix is pasted on the both sides of the positive electrode plates, solvent such as N-methyl pyrrolidone or acetone is used to remove the mix completely from one side. A disc of 15mm in diameter is punched out with a punch tool from the positive electrode plate where the mix is pasted on one side, and a test positive electrode is produced.

The weight of the positive electrode mix in the test positive electrode is obtained such that the weight of the test positive electrode is measured, and the weight of the aluminum foil of the collector is subtracted from it. The test positive electrode described before is used to produce a test battery described below in an inert atmosphere such as argon, and the electric chemical characteristics of the positive electrode are measured with metal Li as a reference.

The test battery has a constitution shown in FIG. 4, uses a positive electrode 41, a negative electrode 42 using metal Li, and separators 43, and the separator 43, the negative electrode 42, the separator 43, the positive electrode 41, and the separator 43 are laminated in this order. This laminated body is held between stainless plates 44 with a pressure applied, and immersed in organic solvent 46 in a container 45. The separator 43 is a minute porous polyethylene film with thickness of 40µm. The positive electrode 41 is laminated such that a face on which a positive electrode active material exists opposes to the negative electrode 42 through the separator 43. The electrolytic solution 46 is mixed solvent comprising ethylene carbonate and dimethyl carbonate with a ratio of 1:2 in volume, and including poly vinylidene fluoride as 1 mol/liter is used.

The test battery with this constitution is charged with a constant current to 4.3V at a charge rate of 0.25C (four-hour rate), and is discharged with a constant current to 3.0V at a discharge rate of 0.25C. The charge and the discharge under the condition described above is designated as one cycle, and the test battery is charge to 4.3V at the charge rate of 0.25C, and the charge and discharge is suspended after about five cycles. The about five cycles of charges and discharges stabilizes the positive electrode capacity.

From this state, the test battery is discharged for ten seconds with a constant current source, and the voltage change of the test battery is measured at an interval of several milliseconds or several score milliseconds. After the discharge, the test battery is charged to a full charged state again, and then discharged. The discharge current is gradually increased from about 1C. It is desirable that the voltage drop of the test battery is 1.0V or less at five seconds after the start of the discharge when a current of 40mA/cm² is supplied from the test battery. The voltage of the test battery at five seconds after the start of the discharge is read from a discharge curve obtained from this ten-second discharge test, and a voltage drop ΔV, which is a difference from the voltage before the start of the discharge is obtained. The gradient of I-ΔV characteristic obtained by plotting ΔV for the individual discharge currents is obtained to measure an internal resistance of the test battery. Though, the measuring is conducted for the discharge from the fully charged state (DOD = 0%), measuring from individual DOD's is also possible.

The electrolytic solution holding ratio of the positive electrode is simply measured with the following method. The positive electrode is cut into a size of 3.0cm × 3.0cm, and is inserted in a glove box containing an inert atmosphere such as argon. Then, after the weight Wa of the positive electrode is measured, the positive electrode is immersed in electrolytic solution for ten minutes. Then, the positive electrode is taken out from the electrolytic solution, the electrolytic solution on the surface is gently wiped off with a hydroscopic nonwoven cloth or the like so as not to damage the electrode, and the weight of the positive electrode Wb is measured. The weights of the positive electrode Wa and Wb include the aluminum foil which is a collector. Then, the weight Wc of the aluminum foil with the size of 3.0cm × 3.0cm, which is measured beforehand, is used to obtain the weights of the positive electrode mix. As the result, the weights of the positive electrode mix before and after the immersion into the electrolytic solution is Wa-Wc and Wb-Wc respectively, (Wb-Wa)/(Wa-Wc) × 100(%) is calculated with these values, and this value is designated as electrolytic solution holding ratio.

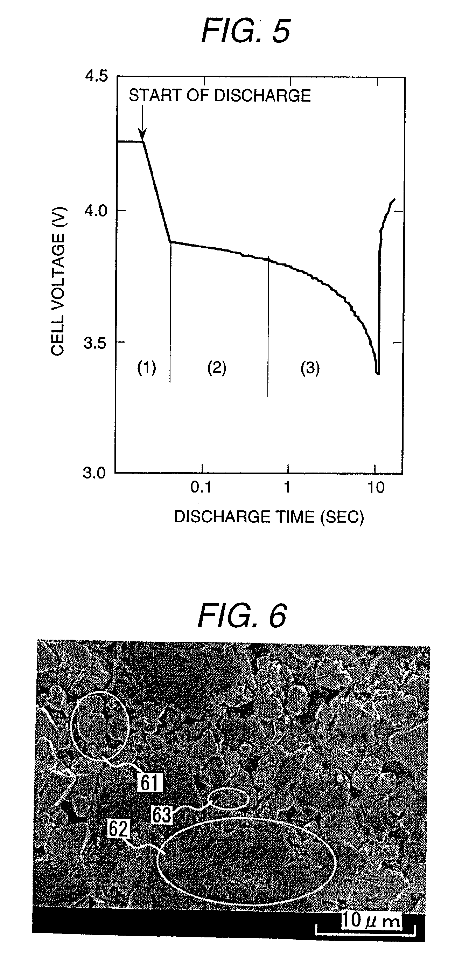

The test battery was used to examine a transient characteristic of the discharge curve of the positive electrode shown in FIG. 5 in detail, and it has been disclosed that the factors of the voltage drop of the positive electrode consists the following three components of (1) to (3). (1) is a component of electron conduction determined by the contact between an active material in an electrode mix, and a conduction assistant, (2) is a component of diffusion in particles derived from insertion/detachment of lithium ions, and (3) is a component of mass transfer determined by the supply of lithium ions from electrolytic solution. (1) is a voltage drop generated after several milliseconds after the start of the discharge, (2) is a voltage drop generated after about one second after the start of the discharge, and (3) is a voltage drop which occurs later than (2). It is important to make the voltage drop caused by (3) as small as possible for the HEV which requires a discharge time about up to 20 seconds, and it is desirable to make the electrolytic solution holding ratio of the positive electrode to 10 to 25wt%.

The present invention uses clustered amorphous carbon as a conduction assistant for the positive electrode to solve the problem described before.

The following section describes how to connect multiple lithium secondary batteries of the present invention to obtain a second battery module. Multiple batteries are connected in serial according to a required voltage. A mean for detecting individual battery voltages, and a mean for controlling a charge current and a discharge current flowing through the individual batteries are provided, and a mean for providing instructions to the two means is provided. Electrical signals are used for communication among the individual means.

For example, the battery module comprises secondary batteries and a controller, and the controller includes a battery voltage detector for detecting individual battery voltages of the lithium secondary batteries, a current controller for controlling charge currents or discharge currents of the lithium secondary batteries, and a battery controller for controlling the current controller according to the lithium battery state from the battery voltage detector. The following section describes the current control according to the state of the lithium secondary battery.

When voltages of the individual batteries detected by the battery voltage detecting means (or battery voltage detector) are lower than a predetermined charge voltage during the charge, a current is supplied to the batteries for charging. An electrical signal from a mean for providing instructions (or battery controller) stops supplying the charge current to a battery whose voltage reaches to the predetermined charge voltage, thereby preventing the battery from being overcharged. The voltage detecting mean detects the voltages of the individual batteries in the same way during discharge, and the discharge current is prevented from flowing when the battery reaches to a predetermined discharge voltage. It is desirable to detect the battery voltage with a precision of 0.1V or less of voltage resolution, and it is preferably 0.02V or less. Controlling such that the voltages of the individual batteries are detected precisely, and the batteries operate without being overcharged or overdischarged realizes a secondary battery module.

The application of the lithium secondary battery of the present invention is not limited. It is applied to the battery for portable information communication machines such as a personal computer, a word processor, a cordless handset, an electronic book player, a mobile phone, a car phone, a pager, a handy terminal a transceiver, and a portable radio apparatus, a battery for different portable machines such as a portable copying machine, an electronic organizer, an electronic calculator, an LCD TV set, a radio receiver, a tape recorder, a head phone stereo, a portable CD player, a video movie, an electric shaver, an electronic translator, a speech input machine, and a memory card, home electric appliances such as refrigerator, an air conditioner, a TV set, stereo set, a water heater, a microwave oven, a dish washer, a dryer, a washing machine, a lighting apparatus, and a toy, and industrial applications such as medical machines, a power storage system, and an elevator.

The present invention especially shows a high efficiency for a machine or a system which requires a high output, and are applied to a battery for a vehicle such as an electric vehicle, a hybrid electric vehicle, and a golf cart.

The following section describes how to realize an electric vehicle which uses the secondary battery of the present invention. The multiple batteries are connected according to a required voltage to constitute each module. It is also possible to connect them in parallel to obtain a required capacity. It is possible to connect the multiple modules to increase a voltage to be supplied. It is desirable to increase the voltage to 30 to 300V for driving a motor.

Connecting the batteries and the battery modules in serial for increasing supplied voltage increases the efficiency of a motor. Though the battery module comprising the lithium secondary battery of the present invention can be provided at any constituting part of a vehicle, it is preferable to place it at a position where a temperature change is relatively small, or a safety is secured during a crash such as a part under or behind a seat.

It is desirable to apply a mean such as forced air cooling or water cooling to the battery module as required since the temperature of the battery module increases due to generated heat during traveling. A mean such as a heat sink with a proper thermal conduction may be provided.

Any one of a DC motor, an induction motor, and a synchronous motor is used as a motor for driving an electric vehicle. It is desirable to use a chopper circuit using a thyristor to variably set the voltage for the speed control when a DC motor is used.

An inverter circuit converts the DC voltage supplied from the module into AC in advance when an AC induction motor or a synchronous motor is used. It is possible to connect a variable resistance to a rotor, or to use a commutator and an inverter circuit to converter power to AC instead of the variable resistance.

Since there is heat generation during driving a vehicle, and it is desirable to apply water cooling or forced air cooling to a motor for using it, it is possible to add a water cooling device or an air cooling device.

The power transmitted from a motor drives wheels to propel an electric vehicle. It is possible to conduct so-called regenerative charging such that a motor which is provided separately, and is connected to a rotating shaft is used to generate during deceleration, and obtained electric energy is supplied to the battery module for efficiently using inertia energy during deceleration.

The following section describes how to obtain a so-called hybrid electric vehicle, an electric vehicle which uses a lithium secondary battery, and has an internal combustion engine and an electric motor as power sources. The multiple batteries are connected according to a required voltage to constitute each module. It is also possible to connect them in parallel to obtain a required capacity. It is possible to connect the multiple modules to increase a voltage to be supplied. It is desirable to increase the voltage to 30 to 300V for driving a motor. Connecting the batteries and the battery modules in serial for increasing supplied voltage increases the efficiency of a motor.

Though the battery module comprising the lithium secondary battery of the present invention can be provided at any constituting part of a vehicle, it is preferable to place it at a position where a temperature change is relatively small, or a safety is secured during a crash such as a part under or behind a seat. It is desirable to apply a mean such as forced air cooling or water cooling to the battery module as required since the temperature of the battery module increases due to generated heat during traveling. A mean such as a heat sink with a proper thermal conduction may be provided.

Any one of a DC motor, an induction motor, and a synchronous motor is used as a motor for driving an electric vehicle. It is desirable to use a chopper circuit using a thyristor to variably set the voltage for the speed control when a DC motor is used. An inverter circuit converts the DC voltage supplied from the module into AC in advance when an AC induction motor or a synchronous motor is used. It is possible to connect a variable resistance to a rotor, or to use a commutator and an inverter circuit to converter power to AC instead of the variable resistance. It is desirable to apply water cooling or forced air cooling to a motor since there is heat generation during driving a vehicle.

A power dividing mechanism such as a mechanism using planetary gears, for example, combines power transmitted from the motor with a driving force from an internal combustion engine such as a gasoline engine or a diesel engine provided separately from the motor, and is transmitted to an axle.

It is not specifically necessary to provide the power dividing mechanism, and it is possible to use both a motor and an internal combustion engine to drive constantly. In this case, the motor is used while it is being directly connected with a rotating shaft of the internal combustion engine. An electronic circuit is provided to control the rotating speed of the internal combustion engine and the rotation speed of the motor according to vehicle speed, and controlling these two different types of power to propel a hybrid electric vehicle. It is possible to conduct so-called regenerative charging such that a motor which is provided separately, and is connected to a rotating shaft is used to generate during deceleration, and obtained electric energy is supplied to the battery module for efficiently using inertia energy during deceleration. Though it is desirable to switch to use the motor and the internal combustion engine such that the propulsion force of a motor is mainly used when the combustion efficiency of an internal combustion engine is low at starting or accelerating, it is possible to always use the motor to assist the propelling force of the internal combustion engine.

The following section describes how to obtain an electric vehicle which is mounted with an electric power generating mean driven by an internal combustion engine or an electric/chemical electric power generating engine, and is driven by a motor simultaneously provided. It is desirable to use a molten-salt type or solid type fuel cell as the electric/chemical electric power generating mean, and a generator driven by an internal combustion engine such as a gasoline engine or a diesel engine can be used. When the fuel cell is used, hydrogen gas is supplied as fuel, and it reacts to oxygen on an oxygen electrode to obtain electric power. The hydrogen is mounted while it is being stored in hydrogen storage alloy, or a pressurized cylinder, or hydrogen generated by decomposing a form of methanol or natural gas with catalytic reaction. Power generated from the fuel cell or the generator is stored in the lithium secondary battery of the present invention, and stored power drives a motor to propel the electric vehicle. Since the efficiency of the fuel cell is low on starting generation, power stored beforehand enables traveling.

The electric vehicles using the lithium secondary battery of the present invention has a large effect on decreasing the weight of a vehicle body to increase the fuel economy, and decreasing the space since the mounted secondary battery module is smaller and lighter than the conventional secondary battery.

The following section specifically describes a comparison of embodiments of the positive electrode plates of the present invention and lithium secondary batteries using it with a positive electrode plate not including clustered amorphous carbon and a lithium secondary battery using it. The present invention is not limited to the following embodiments described below.

The following section describes a comparison example 1.

The positive electrode of the lithium secondary battery in the comparison example 1 is produced as follows.

Li₁₋₀₅Mn_{1.95}O₄ with average particle diameter of 10µm was used as the positive electrode active material. Graphite carbon with average particle diameter of 3µm and specific surface area of 13m²/g, and carbon black with average particle diameter of 0.04µm and specific surface area of 40m²/g mixed as a weight ratio of 4:1 was used as the conduction assistant.

A solution where 8wt% of poly vinylidene fluoride was dissolved in N-methyl pyrrolidone in advance was used as a binding agent, the positive electrode active material, the mixed conduction assistant, and poly vinylidene fluoride were mixed such that the weight ratio is 80:13:7, and a mixer sufficiently kneads them. The kneaded materials became slurry, and was applied by a transfer type continuous coating machine. The slurry was poured into a tank of the coating machine, and was attached to a transfer roll for coating in the coating machine. Changing a gap height of a blade provided close to the transfer roll adjusts the thickness of the coat.

An aluminum foil with a width of 100mm was rolled to a thickness of 20µm was used as a collector in the present comparison example 1. After one side was coated, it was dried at 90°C, and the opposite side was coated with an electrode under the same condition. The roll press pressed it to create the electrode, and the coated thickness of the positive electrode mix was 50µm on both the front side and the rear side. The electrode density was 2.80g/cm³ at this stage.

The created electrode was observed with a field emission scanning electron microscope (FE-SEM). The observation conditions were 5.0kV of an acceleration voltage and 10µA of a beam current. The positive electrode active material was observed with a bright contrast as shown in 61 of FIG. 6. Graphite conduction material 62 and carbon black of 63 were observed with a dark contrast in the drawing. The graphite conduction material in FIG. 62 has a form deformed by the press process, and the particle shape is deformed. Thus, as gaps in the electrode decrease, the electrolytic solution holding ratio decreases. The measured electrolytic solution holding ratio is 8.3wt%.

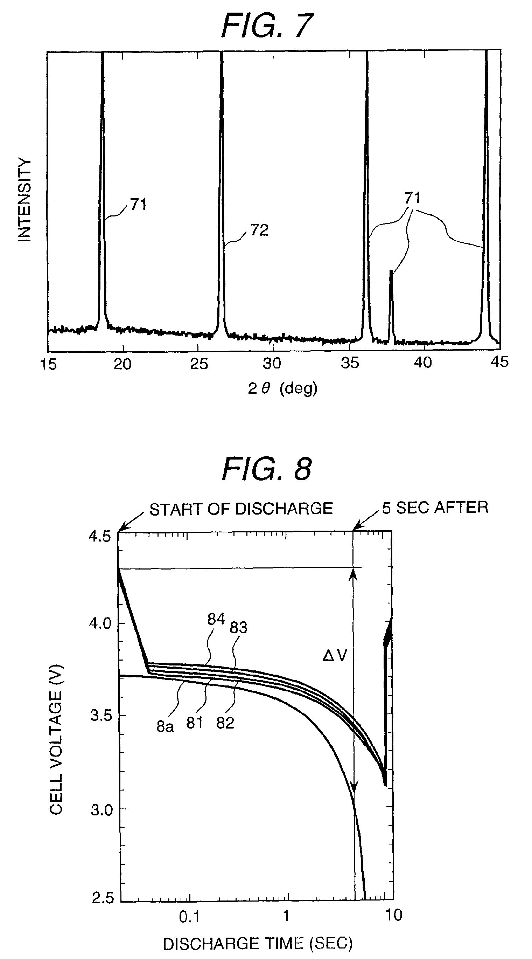

The X-ray diffraction pattern of the electrode was examined, and a diffraction peak with a high intensity of 71 in FIG. 7 caused by the positive electrode active material was observed as well as a diffraction peak 72 with the same degree of intensity caused by the graphite conduction material. d value obtained from the diffraction angle is 0.335nm.

Then, after the positive electrode mix was removed from one side of the positive electrode plate of the present comparison example 1, a disk of 15mm in diameter was punched out as a positive electrode, a test battery shown in FIG. 4 was produced, and discharge was conducted at 40mA/cm² per positive electrode for 10 seconds from a fully charged state.

8a of FIG. 8 shows a discharge waveform when the test battery is discharged. A voltage drop at five seconds is 1.31V.

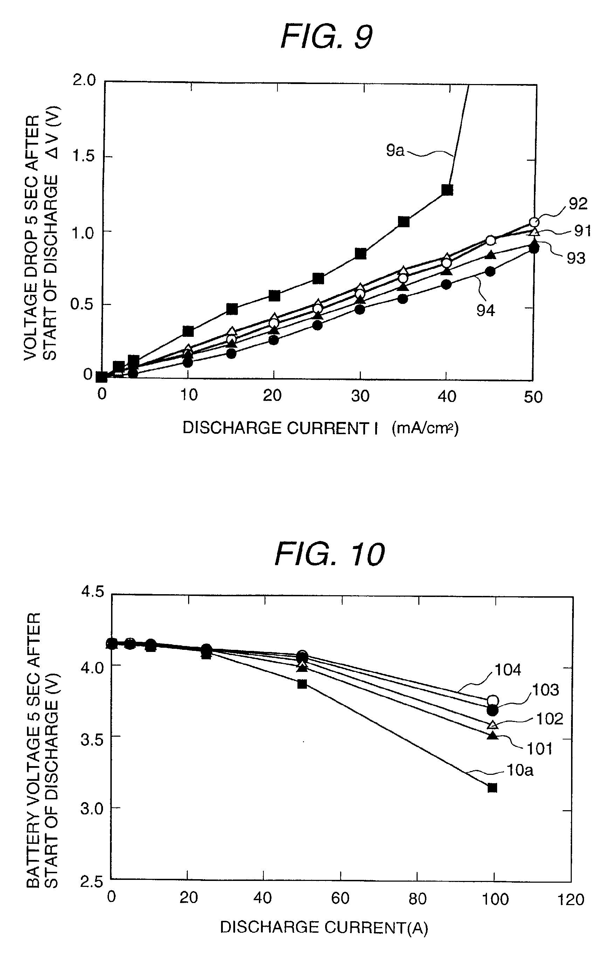

9a in FIG. 9 shows I-ΔV characteristic obtained from the voltage drops at five seconds for the individual discharge currents, and the electrode resistance obtained from the gradient is 20.3Ω.

Then the positive electrode of the present comparison example was cut into a length of 390cm, and a collector tab was provided to flow a current through a terminal on a part which was next to a part where the electrode was pasted, and to which the positive electrode mix was not pasted. The collector tab was made with the material same as that for the aluminum foil of the positive electrode collector, was provided on one side of the electrode with a spacing of 2cm. Amorphous carbon with average diameter of 10µm was used as the negative electrode active material. The negative electrode active material and poly vinylidene fluoride as a binding agent were mixed such that a weight ratio is 95:5, and were sufficiently agitated with a kneading machine to produce the negative electrode. The negative electrode made of amorphous carbon was coated with coat thickness of 30µm with a roll transfer type coating machine as for the positive electrode, was pasted on a copper foil with width of 105mm and thickness of 20µm with a method same as that for the positive electrode, and was pressed to produce the negative electrode. The negative electrode plate was cut into a length of 400cm, and a collector tab was attached with a spacing of 2cm as for the positive electrode plate. The collector tab material is the material same as that for the negative electrode collector. The positive electrode, a porous polyethylene separator with thickness of 40µm, the negative electrode plate, and the second porous separator were laminated in this order, and were rolled in by a rolling machine with a center pin as the center, and the electrode group was produced. The collector of the electrode group was inserted into a stainless sealed container with outer diameter (pipe diameter) of 40mm, and height (pipe length) of 120mm. The positive electrode collector tab was crimped with a crimp fitting for collector to connect with the positive electrode of the battery. The negative electrode collector tab was crimped with the crimp fitting for collector to connect with the negative electrode of the battery in the same way. Then, after a drying process for five hours in vacuum, electrolysis solution of 50cm³ was infused. In the present comparison example, mixture of ethylene carbonate and dimethyl carbonate with a volume ratio of 1:2 was used. LiPF₆ salt with 1 M density was used as electrolyte. The weight of the completed lithium secondary battery is 318g.

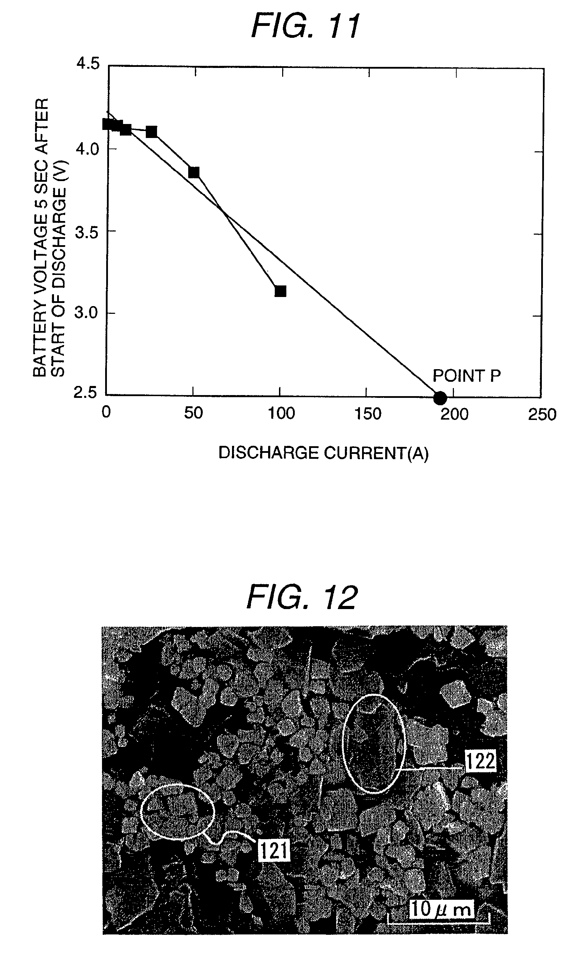

The battery of the present comparison example was used to measure the characteristics in the following method. The battery was charged to 4.2V with a constant current of 3A, and was charged at a constant voltage of 4.2V as a constant current/constant voltage charge for four hours. After the charge was completed, and a pause for 30 minutes was taken, the battery was discharged to a discharge end voltage of 2.7V with 3A. The same charge/discharge was repeated for three cycles, discharge capacity (initial capacity) on third cycle was measured, and it was 9.2Ah. Then, the battery was charged to 4.2V at 3A. The charge method was constant current/constant voltage charge, and the charge continues for four hours. After the charge, a pause of 30 minutes was taken, and the battery was discharged at 5A, 10A, 25A, 50A, and 100A for a short period of ten minutes. After the individual discharges, 30 minutes of a pause was taken, and the battery was charged at 3A as much as the individual discharged capacities. For example, the battery is discharged for ten seconds at 5A, a charge is conducted at 3A for 17 seconds. After the charge, a pause of 30 minutes was taken, and the following measurement was conducted when the battery was stabilized. 10a of FIG. 10 shows a measured result for the battery of the present comparison example 1 where the measuring time is the horizontal axis, and the voltage at five seconds after the start of the measuring is the vertical axis. The measured result of the voltage obtained as described before was extrapolated with a line obtained with least square method, and an intersection P (limit current) with a predetermined voltage of 2.5V is obtained as shown in FIG. 11. The power density of the battery was calculated as (limit current) × 2.5, and 1.5kW/kg was obtained.

The following section describes an embodiment 1. The positive electrode for the lithium secondary battery of the present invention was created as follows. The positive electrode active material was Li_{1.05}Mn_{1.95}O₄, and the conduction assistant was clustered amorphous carbon. The positive electrode active material and the conduction assistant with different average particle diameters were used, and nine types of positive electrode plates were created with combinations shown in TAB. 1 (positive electrode plate No. 11 to No. 19). The weight ratio of the positive electrode active material, the clustered amorphous carbon conduction material, and the binding agent is 80:15:5, which is the same as the comparison example 1.

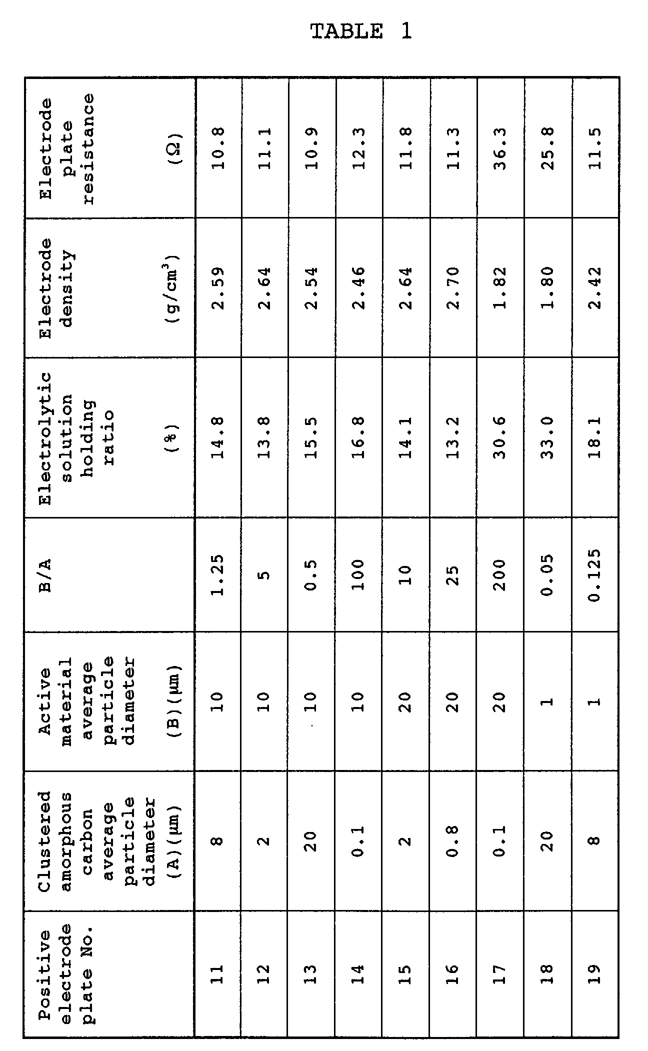

The created plates were observed with field emission scanning electron microscope (FE-SEM). The observation conditions were 5.0kV of an acceleration voltage and 10µA of a beam current. FIG. 12 shows an SEM image of the positive electrode plate 11. The positive electrode active material is observed as bright contrast as 121 in FIG. 12, and the clustered amorphous carbon 122 is observed as dark contrast. It is observed that the clustered amorphous carbon used as the conduction material of the present invention maintains the shape after the press process for creating the electrode. Maintaining the shape keeps air gaps in the electrode, thereby obtaining an effect of preventing the electrolytic solution holding ratio from decreasing. The electrolytic solution holding ratio of the positive electrode plate of the present invention is 13.2wt% or more as shown in TAB. 1, and increases by 4.9wt% or more compared with the case of the comparison example 1 where clustered amorphous carbon is not used. Producing a battery using the positive electrode plate with high electrolytic solution holding ratio provides a high output battery.

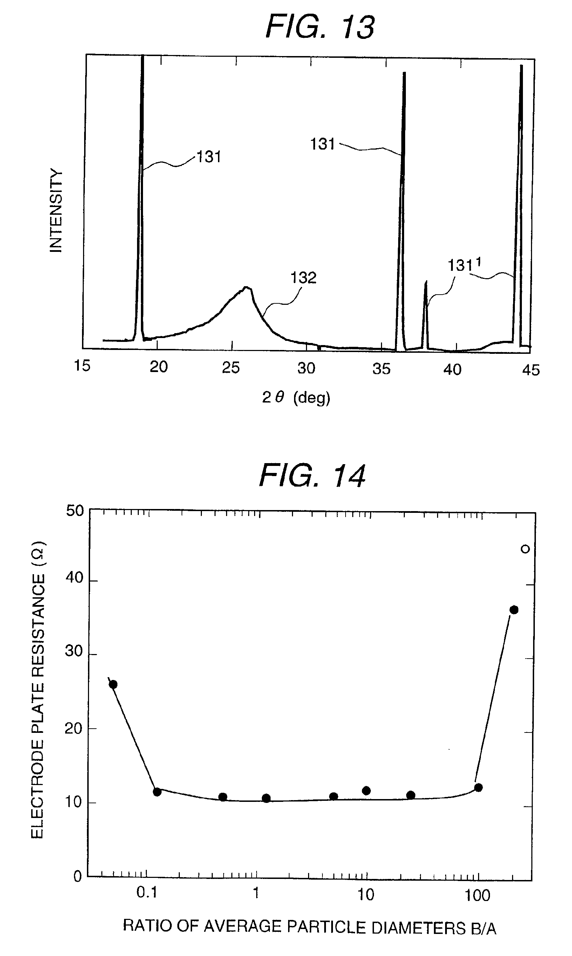

When the positive electrode plate 11 was examined with X-ray, a diffraction pattern shown in FIG. 13 was obtained. A diffraction pattern 131 caused by the positive electrode active material is observed with a high intensity, and only a broad peak with a wide half-value width 132 caused by the clustered amorphous is observed. d value obtained from the diffraction angle is 0.360nm. The characteristic of the diffraction pattern of FIG. 11 is close to the characteristic of a crystal structure when clustered amorphous carbon is used for the positive electrode.

The positive electrode mix was removed from one side of the positive electrode plates 11 to 19 of the present embodiment, a disc with a diameter of 15mm was punched out as a positive electrode, a test battery was created as described in FIG. 4, and discharges with different discharge currents were conducted from a fully charged state for ten seconds. 81 of FIG. 8 shows a discharge waveform when the test battery is discharged at a current of 40mA/cm². 81 presents a voltage drop smaller than that for the positive electrode plate (8a in FIG. 8) of the comparison example 1, and a remarkable effect on restraining the voltage drop is especially observed at two seconds after the start of the discharge. The voltage drop on the discharge curve at five seconds is 0.85V, and an effect of restraining the voltage drop by 0.46V is observed compared with the comparison example 1.

Since the voltage drop of the positive electrode plate affects largely on the battery output, the battery using the electrodes of the present embodiment provides an output higher than the comparison example 1 of prior art. The effect of reducing the voltage drop derives from the effect of the increased electrolytic solution holding ratio caused by the clustered amorphous carbon used for the conduction material.

91 of FIG. 9 shows the I-ΔV characteristic obtained from voltage drops at five seconds for the individual discharge currents, and the electrode plate resistance obtained from the gradient is 10.8Ω. The electrode plate resistance decreases by 10Ω or more compared with the comparison example 1. TAB. 1 summarizes the electrode plate resistances of the positive electrode plates 11 to 19.

FIG. 14 shows a relationship between the ratio of average particle diameter B/A and the electrode plate. The electrode plate resistance is very small as around 11.0Ω, and is excellent when B/A is from 0.1 to 100. When B/A = 0.05 and B/A = 200, which are out of this range, the electrode plate resistance is increased by about twice and three times respectively. The ratio B/A of average particle diameter of the conduction material to the active material in the range from 0.1 to 100 has an effect of realizing a positive electrode plate excellent in collecting characteristic, and it is indispensable to select a positive electrode active material with a particulate diameter in a proper range in addition to using an amorphous conduction material shown in the present embodiment. This provides a positive electrode plate with a low resistance, and using it provides a high output battery.

The electrode plate 11, which has the lowest electrode plate resistance of 10.8Ω. among the electrode plate 11 to 19 of the present embodiment, was used to create a lithium secondary battery with the method used for the comparison example 1. The completed battery weighs 306 g, and is lighter than the battery of the comparison example 1 by 12 g.

When the battery of the present embodiment was used to measure the characteristic with the method same as the comparison example 1, the discharge capacity (initial capacity) was 8.2Ah. 101 in FIG. 10 shows a measured result for the battery of the present embodiment when it was discharged for a short period of ten seconds at 5A, 10A, 25A, 50A, and 100A where the measuring time is the horizontal axis, and the voltage at five seconds after the start of the measuring is the vertical axis. Voltage drops for the discharge currents of 50A or more is smaller than that for the comparison example 1 (10a in FIG. 10). The output capacity of the battery of the present embodiment is 2.5kW/kg, and provides a high output about 1.7 times of the comparison example 1. Using the batteries of the present embodiment to constitute an assembly battery for an electric vehicle, and driving the electric vehicle with it has an effect of providing the electric vehicle with a long traveling distance. Using the assembly battery of the present invention for a hybrid vehicle has an effect of increasing fuel efficiency more than the conventional battery.

The following section describes embodiment 2. A positive electrode of a lithium secondary battery of the present invention is produced as follows. The positive electrode active material was Li_{1.05}Mn_{1.95}O₄, and clustered amorphous carbon added with graphite conduction material with average particle diameter of 10µm and specific surface area of 13m²/g such that a weight ratio was 9:1. The positive electrode active material, the mixed conduction material, and binding agent were mixed such that the weight ratio was 80:15:5 to produce the positive electrode plate. One type of the graphite conduction material was used in the present embodiment.

The positive electrode active material and the conduction material with different average particle diameters were used, and nine types of positive electrode plates shown in TAB. 2 (No. 21 to No. 29) were created with the same method as the comparison example 1. The combinations between the positive electrode active material and the clustered amorphous carbon is exactly the same as the TAB. 1 of the embodiment 1, and a part of the clustered amorphous carbon was replaced with the graphite conduction material in the electrode structure of the present embodiment.

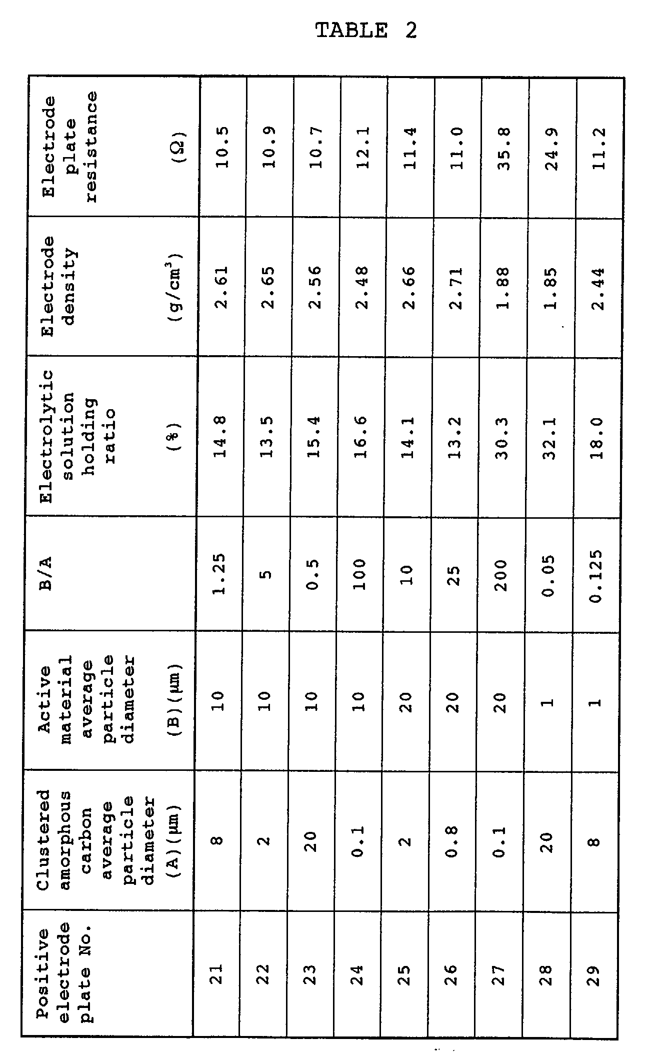

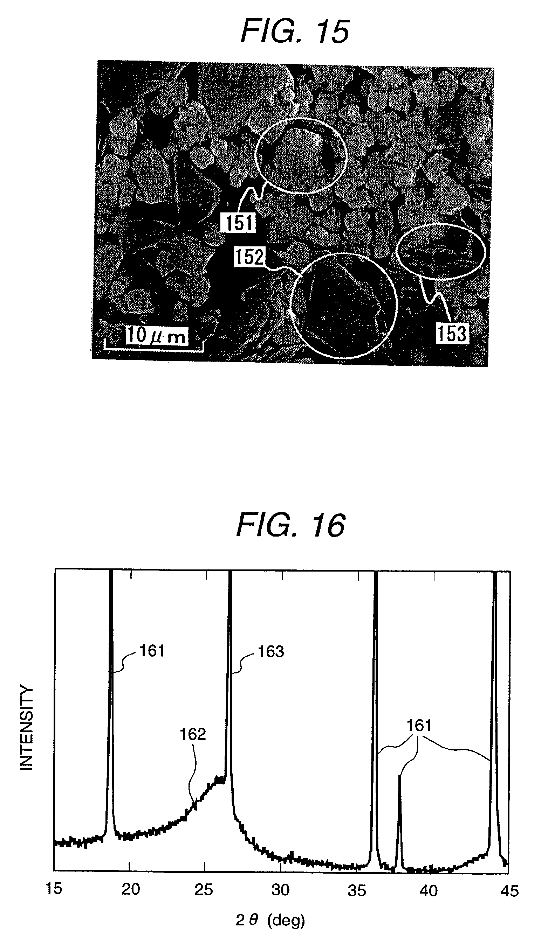

The created plates were observed with field emission scanning electron microscope (FE-SEM). The observation conditions were 5.0kV of an acceleration voltage and 10µA of a beam current. FIG. 15 shows an SEM image of the positive electrode plate 21. The positive electrode active material is observed as bright contrast as 151 in FIG. 15, and the clustered amorphous carbon 152 and the graphite conduction material 153 are observed as dark contrast. It is observed that the clustered amorphous carbon used as the conduction material presents less deformations of the particle shape, and maintains the shape after the press process for creating the electrode. Maintaining the shape keeps air gaps in the electrode, thereby obtaining an effect of preventing the electrolytic solution holding ratio from decreasing. The electrolytic solution holding ratio of the positive electrode plate of the present invention is 13.5wt% or more as shown in TAB. 2, and increases by 5.2wt% or more compared with the case of the comparison example 1 where clustered amorphous carbon is not used. Further, when compared with TAB. 1 of the embodiment 1, for example, for the positive electrode plate 11 and the positive electrode plate 21 which use the amorphous conduction material and the positive electrode active material with the same average particle diameter, the electrolytic solution holding ratio of the positive electrode plate 21 of the present embodiment is 14.8wt%, and presents no change.

Producing a battery using the positive electrode plate with high electrolytic solution holding ratio has an effect of providing a high output battery. Using the graphite conduction material in addition to the clustered amorphous carbon conduction material has an effect of increasing collecting characteristic of the positive electrode plate, thereby providing an effect of further decreasing the decreased resistance of the positive electrode plate.

When the positive electrode plate was examined with X-ray, a broad peak with a wide half-value width 162 caused by the clustered amorphous in a range where 2θ is from 20° to 30°, and a strong diffraction peak 163 at 2θ = 26° were observed in addition to a strong diffraction pattern 161 caused by the positive electrode active material. d values obtained from the diffraction angles are 0.360nm for clustered amorphous carbon, and 0.335nm for the graphite conduction material.

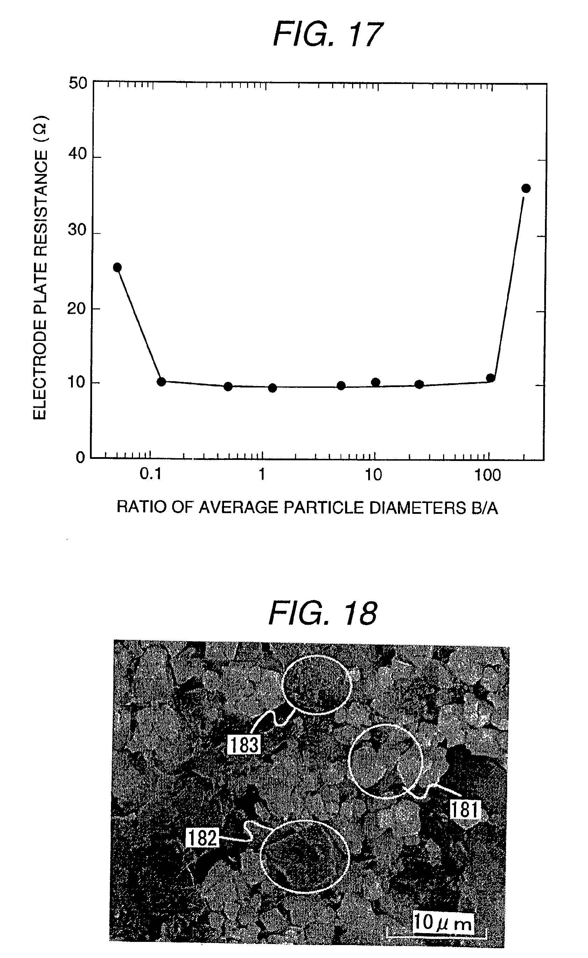

The positive electrode mix was removed from one side of the positive electrode plates 21 to 29 of the present embodiment, a disc with a diameter of 15mm was punched out as a positive electrode, a test battery was created as described in FIG. 4, and discharges with different discharge currents were conducted from a fully charged state for ten seconds. The following section compares characteristics of the positive electrode plate of the comparison example, the positive electrode plate 11 of the embodiment 1, and the positive electrode 21 where clustered amorphous conduction material and a positive electrode active material with particle diameter same as that for the positive electrode plate 11. 82 of FIG. 8 shows a discharge waveform when the test battery was discharged at a current of 40mA/cm². The present embodiment shows a voltage drop of 0.82V at five seconds, which is smaller than that for the positive electrode plate of the comparison example 1 (8a of FIG. 8) by 0.49V, and is smaller than that of the positive electrode plate 11 of the embodiment 1 (81 of FIG. 8) by 0.03V. 92 of FIG. 9 shows the I-ΔV characteristic obtained from voltage drops at five seconds for the individual discharge currents, and the electrode plate resistance obtained from the gradient is 9.8Ω. TAB. 2 summarizes the electrode plate resistances of the positive electrode plates 21 to 29. Adding a graphite conduction material to the clustered amorphous carbon conduction material and the positive electrode material with the same particle diameter as embodiment 1 presents an effect of decreasing the positive electrode resistance by about 1Ω in any cases. FIG. 17 shows a relationship between the ratio of average particle diameter B/A and the electrode plate. The electrode plate resistance is very small and excellent when B/A is from 0.1 to 100. When B/A = 0.05 and B/A = 200, which are out of this range, the electrode plate resistance is increased by about twice and three times respectively. The ratio B/A of average particle diameter of the conduction material to the active material in the range from 0.1 to 100 has an effect of realizing a positive electrode plate excellent in collecting characteristic, and it is indispensable to select a positive electrode active material with a particulate diameter in a proper range in addition to using an amorphous conduction material shown in the present embodiment. This provides a positive electrode plate with a low resistance, and using it provides a high output battery.

The electrode plate 21, which has the lowest electrode plate resistance among the electrode plate 21 to 29 of the present embodiment, was used to create a lithium secondary battery with the method used for the comparison example 1. The weight of the completed battery is 306 g, and is the same as that of the embodiment 1.

When the battery of the present embodiment was used to measure the characteristic with the method same as the comparison example 1, the discharge capacity (initial capacity) is 8.3Ah. 102 in FIG. 10 shows a measured result for the battery of the present embodiment when it was discharged for a short period of ten seconds at 5A, 10A, 25A, 50A, and 100A where the measuring time is the horizontal axis, and the voltage at five seconds after the start of the measuring is the vertical axis. The battery voltage 102 is clearly higher than that of the battery of the embodiment 1 (101 in FIG. 10) for the discharge currents of 50A or more. The output capacity of the battery of the present embodiment is 2.9kW/kg, and provides a high output about 1.9 times of the comparison example 1, and about 1.2 times of the embodiment 1. Using the batteries of the present embodiment to constitute an assembly battery for an electric vehicle, and driving the electric vehicle with it has an effect of providing the electric vehicle with a long traveling distance. Using the assembly battery of the present invention for a hybrid vehicle has an effect of increasing fuel efficiency more than the conventional battery.

The following section describes embodiment 3. A positive electrode of a lithium secondary battery of the present invention is produced as follows. The positive electrode active material was Li_{1.05}Mn_{1.95}O₄, and clustered amorphous carbon added with carbon black with average particle diameter of 0.04µm and specific surface area of 40m²/g such that a weight ratio was 9:1. The positive electrode active material, the mixed conduction material, and binding agent were mixed such that the weight ratio was 80:15:5 to produce the positive electrode plate. One type of the carbon black is used in the present embodiment.

The positive electrode active material and the conduction material with different average particle diameters were used, and nine types of positive electrode plates shown in TAB. 3 (No. 31 to No. 39) were created with the same method as the comparison example 1. The combinations between the positive electrode active material and the clustered amorphous carbon is exactly the same as the TAB. 1 of the embodiment 1, and a part of the clustered amorphous carbon wa replaced with the carbon black in the electrode structure of the present embodiment.

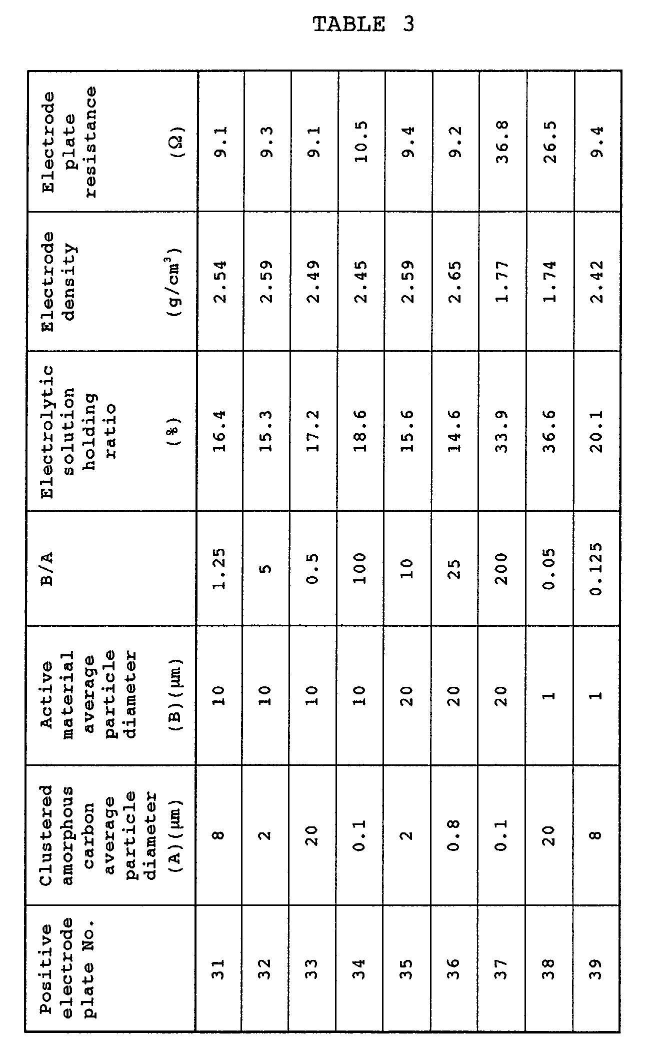

The created plates were observed with field emission scanning electron microscope (FE-SEM). The observation conditions were 5.0kV of an acceleration voltage and 10µA of a beam current. FIG. 18 shows an SEM image of the positive electrode plate 31. The positive electrode active material was observed as bright contrast as 181 in FIG. 18, and the clustered amorphous carbon 182, the positive electrode active material, and the fine particles of the carbon black 183 attached on the surface of the clustered amorphous carbon were observed as dark contrast. It is observed that the added clustered amorphous carbon used as the conduction material maintains air gaps in the electrode after the press process for creating the electrode, thereby obtaining an effect of preventing the electrolytic solution holding ratio from decreasing. Adding the carbon black provides an effect of increasing the electrolytic solution holding ratio. The electrolytic solution holding ratio of the positive electrode plate of the present invention is 14.6wt% or more as shown in TAB. 3, and increases by 6.3wt% or more compared with the case of the comparison example 1 where clustered amorphous carbon is not used. Further, when compared with TAB. 1 of the embodiment 1, for example, for the positive electrode plate 11 and the positive electrode plate 31 which use the amorphous conduction material and the positive electrode active material with the same average particle diameter, the electrolytic solution holding ratio of the positive electrode plate 31 of the present embodiment increases to 16.4wt% by 1.6wt%. Producing a battery using the positive electrode plate with high electrolytic solution holding ratio has an effect of providing a high output battery.

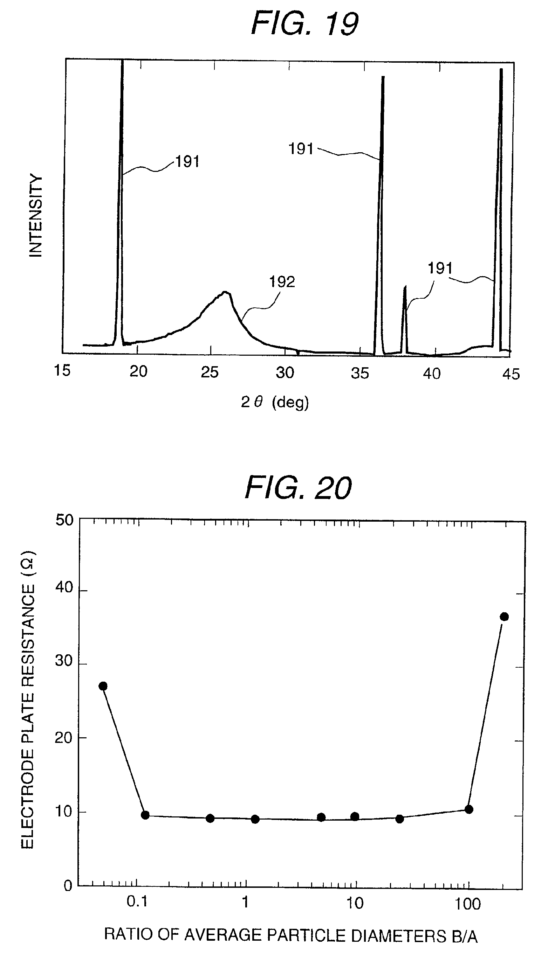

When the positive electrode plate 31 was examined with X-ray, a diffraction pattern shown in FIG. 19 was obtained. A diffraction pattern 191 caused by the positive electrode active material is observed with a high intensity, and only a broad peak with a wide half-value width caused by the clustered amorphous 192 is observed. d value obtained from the diffraction angle is 0.360nm.

The positive electrode mix was removed from one side of the positive electrode plates 31 to 39 of the present embodiment, a disc with a diameter of 15mm was punched out as a positive electrode, a test battery was created as described in FIG. 4, and discharges with different discharge currents were conducted from a fully charged state for ten seconds. 83 of FIG. 8 shows a discharge waveform when the test battery using the positive electrode 31 was discharged at a current of 40mA/cm². Comparing voltage drops at five seconds from the start of the discharge, 83 shows a voltage drop of 0.78V at five seconds, which is smaller than that for the positive electrode plate of the comparison example 1 (8a of FIG. 8) by 0.53V, and is smaller than that of the positive electrode plate of the embodiment 1 (82 of FIG. 8) by 0.07V. 93 of FIG. 9 shows the I-ΔV characteristic obtained from voltage drops at five seconds for the individual discharge currents, and the electrode plate resistance obtained from the gradient is 9.1Ω. TAB. 3 summarizes the electrode plate resistances of the positive electrode plates 31 to 39. Adding carbon black to the clustered amorphous carbon conduction material and the positive electrode material with the same particle diameter as embodiment 1 presents an effect of decreasing the positive electrode resistance by about 1Ω in any cases compared with embodiment 2. FIG. 20 shows a relationship between the ratio of average particle diameter B/A and the electrode plate. The electrode plate resistance is very small and excellent when B/A is from 0.1 to 100. When B/A = 0.05 and B/A = 200, which are out of this range, the electrode plate resistance is increased by about twice and three times respectively. The ratio B/A of average particle diameter of the conduction material to the active material in the range from 0.1 to 100 has an effect of realizing a positive electrode plate excellent in collecting characteristic, and it is indispensable to select a positive electrode active material with a particulate diameter in a proper range in addition to using an amorphous conduction material shown in the present embodiment. This provides a positive electrode plate with a low resistance, and using it provides a high output battery.

The electrode plate 31, which has the lowest electrode plate resistance among the electrode plate 31 to 39 of the present embodiment, was used to create a lithium secondary battery with the method used for the comparison example 1. The weight of the completed battery is 303g, and is lighter than the battery of the comparison example 1 by 15g, and lighter than the batteries of embodiments 1 and 2 by 3g.

When the battery of the present embodiment was used to measure the characteristic with the method same as the comparison example 1, the discharge capacity (initial capacity) is 8.3Ah. 103 in FIG. 10 shows a measured result for the battery of the present embodiment when it is discharged for a short period of ten seconds at 5A, 10A, 25A, 50A, and 100A where the measuring time is the horizontal axis, and the voltage at five seconds after the start of the measuring is the vertical axis. The battery voltage 103 is clearly higher than that of the battery of the embodiment 2 (102 in FIG. 10) for the discharge currents of 50A or more. The output capacity of the battery of the present embodiment is 3.3kW/kg, and provides a high output about 2.2 times of the comparison example 1, and about 1.1 times of the embodiment 2. Using the batteries of the present embodiment to constitute an assembly battery for an electric vehicle, and driving the electric vehicle with it has an effect of providing the electric vehicle with a long traveling distance. Using the assembly battery of the present invention for a hybrid vehicle has an effect of increasing fuel efficiency more than the conventional battery.

The following section describes embodiment 4. A positive electrode of a lithium secondary battery of the present invention was produced as follows. The positive electrode active material was Li_{1.05}Mn_{1.95}O₄, and clustered amorphous carbon added with a graphite conduction assistant with average particle diameter of 3µm and specific surface area of 13m²/g, and carbon black with average particle diameter of 0.04µm and specific surface area of 40m²/g such that a weight ratio was 8.5:15:5. The positive electrode active material, the mixed conduction material, and binding agent were mixed such that the weight ratio is 80:15:5 to produce the positive electrode plate. One type of the graphite conduction material, and one type of the carbon black are used in the present embodiment. The positive electrode active material and the conduction material with different average particle diameters were used, and nine types of positive electrode plates shown in TAB. 4 (No. 41 to No. 49) were created with the same method as the comparison example 1. The combinations between the positive electrode active material and the clustered amorphous carbon is exactly the same as the TAB. 4 of the embodiment 1, and a part of the clustered amorphous carbon is replaced with the graphite conduction material and the carbon black in the electrode structure of the present embodiment.

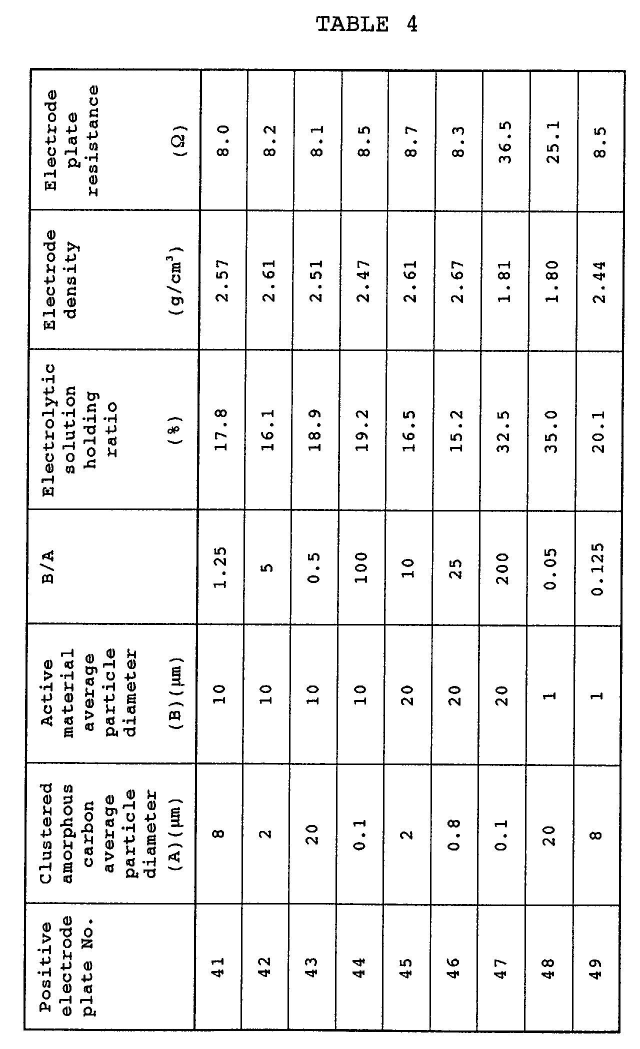

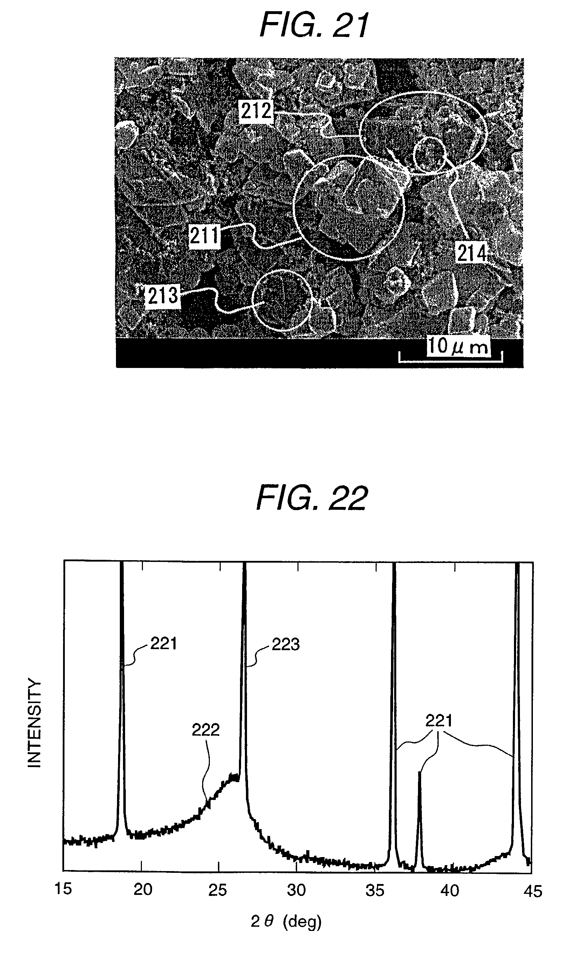

The created plates were observed with field emission scanning electron microscope (FE-SEM). The observation conditions were 5.0kV of an acceleration voltage and 10µA of a beam current. FIG. 21 shows an SEM image of the positive electrode plate 41. The positive electrode active material was observed as bright contrast as 211 in FIG. 21, and the clustered amorphous carbon 212, and the graphite conduction material 213, as well as the fine particles of the carbon black 214 attached on the surface of the positive electrode active material, the clustered amorphous carbon, and the graphite conduction material were observed as dark contrast. It is observed that the added clustered amorphous carbon used as the conduction material maintains air gaps in the electrode after the press process for creating the electrode, thereby obtaining an effect of preventing the electrolytic solution holding ratio from decreasing. Adding the graphite conduction material enhances collection network, and adding the carbon black provides an effect of increasing the electrolytic solution holding ratio. The electrolytic solution holding ratio of the positive electrode plate of the present invention is 15.2wt% or more as shown in TAB. 4, and increases by 6.9wt% or more compared with the case of the comparison example 1 where clustered amorphous carbon is not used. Further, when compared with TAB. 1 of the embodiment 1, for example, for the positive electrode plate 11 and the positive electrode plate 31 which use the amorphous conduction material and the positive electrode active material with the same average particle diameter, the electrolytic solution holding ratio of the positive electrode plate 31 of the present embodiment increases to 17.8wt% by 3.0wt%. Producing a battery using the positive electrode plate with high electrolytic solution holding ratio has an effect of providing a high output battery.

When the positive electrode plate 31 was examined with X-ray, a diffraction pattern shown in FIG. 19 was obtained. A diffraction pattern 191 caused by the positive electrode active material is observed with a high intensity, and only a broad peak with a wide half-value width caused by the clustered amorphous 192 is observed. d value obtained from the diffraction angle is 0.360nm.

The positive electrode mix was removed from one side of the positive electrode plates 41 to 49 of the present embodiment, a disc with a diameter of 15mm was punched out as a positive electrode, a test battery was created as described in FIG. 4, and discharges with different discharge currents were conducted from a fully charged state for ten seconds. 84 of FIG. 8 shows a discharge waveform when the test battery using the positive electrode 41 was discharged at a current of 40mA/cm². 84 shows a voltage drop of 0.65V at five seconds, which is smaller than that for the positive electrode plate of the comparison example 1 (8a of FIG. 8) by 0.66V, and is smaller than that of the positive electrode plate 21 of the embodiment 2 (82 of FIG. 8) and that of the positive electrode plate 31 of the embodiment 3 by 0.20V or more. TAB. 3 summarizes the electrode plate resistances of the positive electrode plates 41 to 49. Adding the graphite conduction material and the carbon black to the clustered amorphous carbon conduction material and the positive electrode material with the same particle diameter as embodiment 1 presents an effect of decreasing the positive electrode resistance by about 1 to 2Ω in any cases compared with embodiments 2 and 3. FIG. 20 shows a relationship between the ratio of average particle diameter B/A and the electrode plate. The electrode plate resistance is very small and excellent when B/A is from 0.1 to 100. When B/A = 0.05 and B/A = 200, which are out of this range, the electrode plate resistance is increased by about twice and three times respectively. The ratio B/A of average particle diameter of the conduction material to the active material in the range according to Claim 4 has an effect of realizing a positive electrode plate excellent in collecting characteristic, and it is indispensable to select a positive electrode active material with a particulate diameter in a proper range in addition to using an amorphous conduction material shown in the present embodiment. This provides a positive electrode plate with a low resistance, and using it provides a high output battery.

The electrode plate 41, which has the lowest electrode plate resistance among the electrode plate 41 to 49 of the present embodiment, was used to create a lithium secondary battery with the method used for the comparison example 1. The weight of the completed battery is 303 g, and is lighter than the battery of the comparison example 1 by 15 g, and lighter than the batteries of embodiments 1 and 2 by 3 g.

When the battery of the present embodiment was used to measure the characteristic with the method same as the comparison example 1, the discharge capacity (initial capacity) was 8.3Ah. 104 in FIG. 10 shows a measured result for the battery of the present embodiment when it was discharged for a short period of ten seconds at 5A, 10A, 25A, 50A, and 100A where the measuring time is the horizontal axis, and the voltage at five seconds after the start of the measuring is the vertical axis. The battery voltage 104 is clearly higher than that of the batteries of the embodiment 2 and the embodiment 3 (102 and 103 in FIG. 10) for the discharge currents of 50A or more. The output capacity of the battery of the present embodiment is 3.6kW/kg, and provides a high output about 2.4 times of the comparison example 1, about 1.2 times of the embodiment 2, and about 1.1 times of the embodiment 3. Using the batteries of the present embodiment to constitute an assembly battery for an electric vehicle, and driving the electric vehicle with it has an effect of providing the electric vehicle with a long traveling distance. Using the assembly battery of the present invention for a hybrid vehicle has an effect of increasing fuel efficiency more than the conventional battery.

The following section describes embodiment 5. A positive electrode of a lithium secondary battery of the present invention was produced as follows. The positive electrode active material was Li_{1.05}Mn_{1.95}O₄ with average particle diameter of 10µm, and clustered amorphous carbon with average particle diameter of 8µm as the conduction assistant. The positive electrode active material, the mixed conduction material, and binding agent are mixed such that the weight ratio is 85:10:5 to produce the positive electrode with the method of the comparison example 1. After the mixed electrode mix was pasted and dried, a line pressure of a press of a roll press was adjusted to produce the positive electrode plates with six different electrode densities (No. 51 to 56). TAB. 5 shows the electrode density and the electrolytic solution holding ratio of the produced positive electrode plates. All of the obtained positive electrodes have the identical electrode mix composition, and different electrode densities, and the electrolytic solution holding ratio ranges from 8.1wt% to 28.8wt% because of the different electrode densities.

**TABLE 5**

| Positive electrode plate No. | Electrolytic solution holding ratio (%) | Electrode density (g/cm³) | Electrode plate resistance (Ω) |
|---|---|---|---|
| 51 | 8.1 | 2.91 | 21.4 |
| 52 | 10.0 | 2.74 | 13.3 |
| 53 | 12.8 | 2.70 | 11.2 |
| 54 | 21.3 | 2.44 | 11.3 |
| 55 | 25.0 | 2.41 | 12.8 |
| 56 | 28.8 | 2.03 | 20.1 |

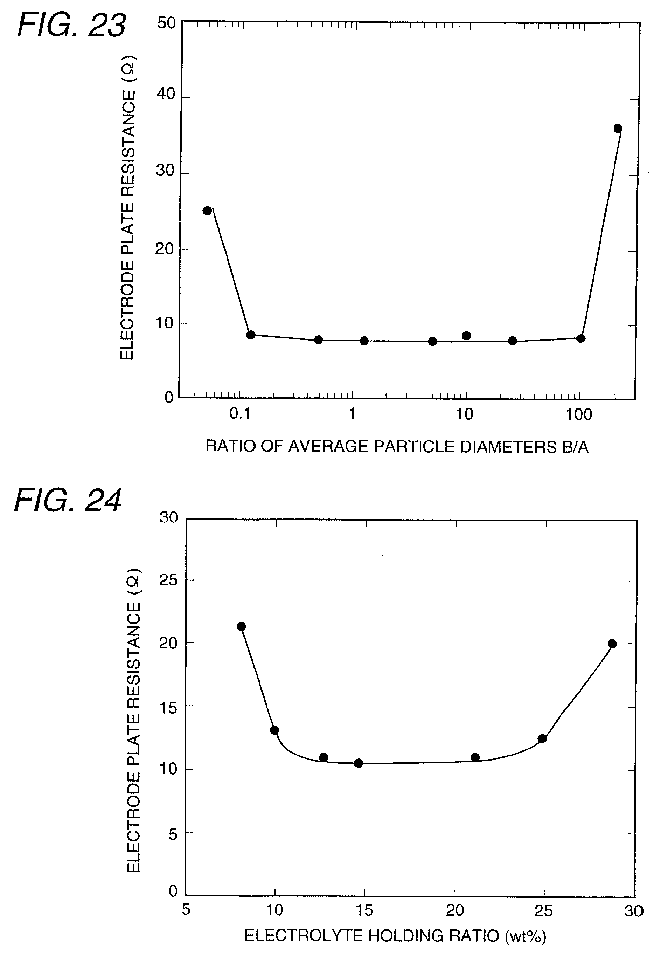

The positive electrode mix was removed from one side of the positive electrode plates 51 to 56 of the present embodiment, a disc with a diameter of 15mm was punched out as a positive electrode, a test battery was created as described in FIG. 4, discharges with different discharge currents were conducted from a fully charged state for ten seconds, and voltage drops at 5 seconds were read to measure electrode plate resistances of the positive electrode plates. TAB. 5 summarizes the electrode plate resistances of the positive electrode plates 51 to 56. FIG. 24 shows a relationship between the electrolytic solution holding ratio and the electrode plate resistance. The electrode resistance is as small as 15Ω or less, and is excellent while the electrolytic solution holding ratio is in a range from 10 to 25wt%, the resistances of the positive electrode 51 whose electrolytic solution holding ratio is smaller than 10wt%, and the resistances of the positive electrode 56 whose electrolytic solution holding ratio is larger than 25.0wt% exceed 20Ω, and it is indispensable that the electrolytic solution holding ratio is in the range according to Claim 5 to obtain a positive electrode plate with a low resistance. Producing a positive electrode plate with the electrolytic solution holding ratio in this range has an effect of obtaining a positive electrode plate with a low resistance, and using it has an effect of obtaining a high output battery.

The electrode plates 51 to 56 are used to create lithium secondary batteries 61 to 66 with the method used for the comparison example 1. The weights of the completed battery are from 298 to 325g. When the batteries of the present embodiment were used to measure the characteristic with the method same as the comparison example 1, the discharge capacities (initial capacity) range from 7.5 to 8.2Ah. The power density of the batteries of the present embodiment was obtained with the method same as that shown in the comparison example 1, the batteries using positive electrode plates with the electrolytic solution holding ratio ranging from 10wt% to 25wt% provides a power density of 2.9kW/g, which is about two times of that of the comparison example 1, the batteries 61 and 66 using the positive electrode plate 51 with electrolytic solution holding ratio of 10wt% or less, and positive electrode plate 56 with electrolytic solution holding ratio of 28wt% or more respectively provide output densities 1.1kW/kg and 1.2kW/kg, which are lower than that of the positive electrode plate of the comparison example 1 by 0.3kW/kg or more. Using the batteries of the present embodiment to constitute an assembly battery for an electric vehicle, and driving the electric vehicle with it has an effect of providing an electric vehicle with a long traveling distance. Using the assembly battery of the present invention for a hybrid vehicle has an effect of increasing fuel efficiency more than the conventional battery.

As described before, a high output lithium secondary battery of the present invention has a positive electrode which is produced based on a mix produced by properly adding a binding agent such as poly vinylidene fluoride to a positive electrode active material such as spinel type manganese oxide represented as Li₁₊ₓMn₂₋ₓO₄ (0<x<0.33) and transition metal composite oxide where transition metal is replaced partly with other elements, and a conduction assistant including clustered amorphous carbon whose surface spacing of (002) surface, d₀₀₂, is 0.350 to 0.390, and whose average particle diameter is 1 to 30µm. This mix is made into a belt-shape with a collector such as aluminum foil with thickness from about 15 to 20µm as a core, and is pasted such that the thickness is from 20 to 150µm. It is desirable to set the mixture ratio of the positive electrode active material to 60 to 95 (wt%) in the mix, and a lithium secondary battery where the density of the positive electrode comprising the positive electrode active material, the clustered amorphous carbon, and the conduction assistant is 2.4 to 2.8g/cm³, and the electrolytic solution holding ratio of the positive electrode mix is 10 to 25wt% with an excellent output characteristics is provided.

## Claims

1. A nonaqueous lithium secondary battery comprising:
a positive electrode (31) which inserts/detaches lithium ions, and includes a collector on which a positive electrode active material for inserting/detaching lithium ions, a conduction assistant for increasing electric conduction of said positive electrode active material, and a binding agent for binding said positive electrode active material and said conduction assistant are pasted;
a negative electrode (32) for inserting/detaching lithium ions; and
a separator (33) for separating said positive electrode and said negative electrode;
wherein a ratio (B/A) of the average particle diameter of said conduction assistant (A) to the average particle diameter of said positive electrode active material (B) is from 0.1 to 100, and said conduction assistant includes at least clustered amorphous carbon.

2. A nonaqueous lithium secondary battery comprising:
a positive electrode (31) which inserts/detaches lithium ions, and includes a collector on which a positive electrode active material for inserting/detaching lithium ions, a conduction assistant for increasing electric conduction of said positive electrode active material, and a binding agent for binding said positive electrode active material and said conduction assistant are pasted;
a negative electrode (32) for inserting/detaching lithium ions; and
a separator (33) for separating said positive electrode and said negative electrode;
wherein said conduction assistant includes a mixture of clustered amorphous carbon where a ratio (B/A) of the average particle diameter of said conduction assistant (A) to the average particle diameter of said positive electrode active material (B) is from 0.1 to 100, and graphite carbon where the spacing of a surface d₀₀₂ with surface index (002) by X-ray analysis is from 0.335nm to 0.337nm.

3. A nonaqueous lithium secondary battery comprising:
a positive electrode (31) which inserts/detaches lithium ions, and includes a collector on which a positive electrode active material for inserting/detaching lithium ions, a conduction assistant for increasing electric conduction of said positive electrode active material, and a binding agent for binding said positive electrode active material and said conduction assistant are applied;
a negative electrode (32) for inserting/detaching lithium ions; and
a separator (33) for separating said positive electrode and said negative electrode;
wherein said positive electrode includes at least clustered amorphous carbon where a ratio (B/A) of an average particle diameter of said conduction assistant (A) to an average particle diameter of said positive electrode active material (B) is from 0.1 to 100, and carbon black.

4. A nonaqueous lithium secondary battery comprising:
a positive electrode (31) which inserts/detaches lithium ions, and includes a collector on which a positive electrode active material for inserting/detaching lithium ions, a conduction assistant for increasing electric conduction of said positive electrode active material, an a binding agent for binding said positive electrode active material and said conduction assistant are applied;
a negative electrode (32) for inserting/detaching lithium ions; and
a separator (33) for separating said positive electrode and said negative electrode;
wherein said conduction assistant includes a mixture of clustered amorphous carbon where a ratio (B/A) of an average particle diameter of said conduction assistant (A) to an average particle diameter of said positive electrode active material (B) is from 0.1 to 100, graphite carbon where the spacing of a surface d₀₀₂ with surface index (002) by X-ray analysis is from 0.335nm to 0.337nm, and carbon black.

5. The lithium secondary battery according to Claim 3 or Claim 4, wherein said carbon black is acetylene black.

6. The lithium secondary battery according to any one of Claim 1 to Claim 5, wherein electrolytic solution holding ratio per mixture weight of said positive electrode is 10 to 25wt%.

7. A battery module which is constituted by connecting multiple lithium secondary batteries according to any one of Claim 1 to Claim 6.

8. The battery module according to Claim 7, wherein said lithium secondary battery respectively includes a battery voltage detector for detecting battery voltage, a current controller for controlling a charge current flowing to said each lithium secondary battery or a discharge current flowing from said lithium secondary battery, and a battery controller for controlling said current controller according to the state of said lithium secondary battery from said battery voltage detector.

9. The battery module according to Claim 7 or Claim 8, wherein said lithium secondary batteries are connected in serial.

10. The second battery module according to any one of Claim 7 to Claim 9, wherein said lithium secondary batteries are connected in parallel.

11. An electric vehicle which is loaded with, and is driven by a battery module according to any one of Claim 7 to Claim 10.

12. An information machine which is loaded with, and driven by a secondary battery according to any one of Claim 7 to Claim 10.

13. An information machine which is loaded with, and driven by a secondary battery according to any one of Claim 1 to Claim 9.
